(19) Europäisches Patentamt
European Patent Office
Office européen des brevets

(11) **EP 4 373 000 A2**

(12) # EUROPEAN PATENT APPLICATION

(43) Date of publication:
**22.05.2024 Bulletin 2024/21**

(21) Application number: **23205417.1**

(22) Date of filing: **24.10.2023**

(51) International Patent Classification (IPC):
**H04B 7/024** (2017.01)   **H04L 25/02** (2006.01)
**H04L 5/00** (2006.01)

(52) Cooperative Patent Classification (CPC):
**H04L 25/0202; H04B 7/024; H04L 5/0035**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 KR 20220137766**
**10.01.2023 KR 20230003513**

(71) Applicant: **Samsung Electronics Co., Ltd.**
**Suwon-si, Gyeonggi-do 16677 (KR)**

(72) Inventors:
• **YOON, Hongsik**
**16677 Suwon-si (KR)**
• **PARK, Jungmin**
**16677 Suwon-si (KR)**
• **BANG, Jonghyun**
**16677 Suwon-si (KR)**

(74) Representative: **Marks & Clerk LLP**
**15 Fetter Lane**
**London EC4A 1BW (GB)**

(54) **TERMINAL AND BASE STATION SUPPORTING MULTIPLE TRANSMISSION CONFIGURATION INDICATOR STATES AND OPERATING METHODS THEREOF**

(57)   An operating method of a terminal to communicate with a base station, includes: detecting at least one overlapped third control channel element (CCE) in a plurality of first CCEs included in first search spaces corresponding to a first physical downlink control channel (PDCCH) received from a first transmission and reception point (TRP) of the base station, and in a plurality of second CCEs included in second search spaces corresponding to a second PDCCH received from the first TRP and a second TRP of the base station; determining, based on the at least one overlapped third CCE, object CCEs from the plurality of first CCEs and the plurality of second CCEs; and performing channel estimation of the object CCEs by using a first memory.

FIG. 7

**Description**

TECHNICAL FIELD

The present disclosure relates generally to wireless communications, and more particularly, to a terminal and a base station supporting multiple transmission configuration indicator (TCI) states and operating methods thereof.

BACKGROUND

A multiple-input and multiple-output (MIMO) transmission method has been widely used in digital communication to increase the capacity of a channel. For example, a 3rd Generation Partnership Project (3GPP) standard supports a MIMO transmission method in which a physical downlink shared channel (PDSCH) and/or a physical uplink shared channel (PUSCH) is transmitted via different physical antennas and/or different antenna ports.

When the different antenna ports of the MIMO transmission method are in a single transmission and reception point (TRP), the MIMO transmission method may be referred to as a single TRP transmission method. When the different antenna ports are in multiple TRPs that may not be in the same location, the MIMO transmission method may be referred to as a multiple TRP method.

The 3GPP standard has proposed a high speed train (HST)-single frequency network (SFN) technical scenario using a multiple TRP method. For example, in such a scenario, a first TRP and a second TRP may each transmit a physical downlink control channel (PDCCH) to a terminal through the SFN, and may notify the terminal that the PDCCH is transmitted to the multiple TCI states through radio resource control (RRC) signaling and/or a medium access control (MAC) control element (CE).

The TCI state is subject to properties of a control resource set (CORESET), and some CORESETs or some common search spaces need to be configured to be decodable in a legacy terminal that may not support the multiple TCIs. Consequently, a single TCI state may be applied to some CORESETs and/or some common search spaces, and/or multiple TCI states may be applied to user specific search spaces. When at least some of the common search spaces to which a single TCI state is applied and user specific search spaces to which multiple TCI states are applied overlap each other in a time-frequency resource, the terminal may need to perform channel estimation based on the single TCI state and channel estimation based on the multiple TCI states for the same resource. As a result, the size (e.g., amount) of the memory needed by the terminal to perform the channel estimation may exceed the size of the memory that may have been allocated in advance of the channel estimation operation.

SUMMARY

Embodiments of the present disclosure provide a terminal and an operating method thereof, wherein the terminal is configured to identify whether first search spaces to which a single TCI state is applied and second search spaces to which multiple TCI states are applied overlap each other, and perform channel estimation of the first search spaces and the second search spaces based on an identification result to prevent unexpectedly exceeding a memory size allocation that may have been previously allocated for channel estimation.

Embodiments of the present disclosure also provide a base station and an operating method thereof, wherein the base station is configured to schedule the first search spaces to which the single TCI state is applied and the second search spaces to which the multiple TCI states are applied so as not to overlap each other so that a terminal may be prevented from exceeding a memory size allocation when performing channel estimation of the first search spaces and the second search spaces.

According to an aspect of an example embodiment, an operating method of a terminal to communicate with a base station, includes: detecting at least one overlapped third control channel element (CCE) in a plurality of first CCEs included in first search spaces corresponding to a first physical downlink control channel (PDCCH) received from a first transmission and reception point (TRP) of the base station, and in a plurality of second CCEs included in second search spaces corresponding to a second PDCCH received from the first TRP and a second TRP of the base station; determining, based on the at least one overlapped third CCE, object CCEs from the plurality of first CCEs and the plurality of second CCEs; and performing channel estimation of the object CCEs by using a first memory.

According to an embodiment, the operating method may further comprise counting a number of non-overlapped CCEs based on the overlapped third CCE. The channel estimation may be further performed based on a result of the counting. The counting the number of the non-overlapped CCEs may comprise counting the overlapped third CCE as a non-overlapped CCE in the plurality of first CCEs and the plurality of second CCEs. Each instance of the overlapped third CCE in the plurality of first CCEs and the plurality of second CCEs may be counted as a separate non-overlapped CCE.

According to an aspect of an example embodiment, an operating method of a terminal, includes: detecting an overlapped third control channel element (CCE) in a plurality of first CCEs included in common search spaces and based on a single transmission configuration indicator (TCI) state, and in a plurality of second CCEs included in user specific search spaces and based on multiple TCI states; counting a number of non-overlapped CCEs based on the overlapped third CCE; performing channel estimation of the overlapped third CCE based on a result of the counting.

According to an aspect of an example embodiment, an operating method of a terminal, includes: detecting, based on system information received from a base station, an overlapped third control channel element (CCE) in a plurality of first CCEs included in common search spaces and based on a single transmission configuration indicator (TCI) state, and in a plurality of second CCEs included in user specific search spaces and based on multiple TCI states; identifying whether a first memory allocated to channel estimation of the plurality of first CCEs and the plurality of second CCEs is sufficient, based on a number of non-overlapped CCEs in the plurality of first CCEs and the plurality of second CCEs; and performing, based on a result of the identifying, at least one of a first channel estimation of the overlapped third CCE based on the single TCI state and a second channel estimation of the overlapped third CCE based on the multiple TCI states.

According to an aspect of an example embodiment, an operating method of a base station to communicate with a terminal, includes: receiving, from the terminal, capability information indicating that the terminal supports simultaneous activation of multiple transmission configuration indicator (TCI) states of one control resource set (CORESET); performing scheduling based on the capability information so that first search spaces corresponding to a first physical downlink control channel (PDCCH) to be transmitted through a first transmission and reception point (TRP) of the base station do not overlap second search spaces corresponding to a second PDCCH to be transmitted through the first TRP and a second TRP of the base station; and transmitting, based a result of the scheduling, the first PDCCH to the terminal through the first TRP and the second PDCCH to the terminal through the first TRP and the second TRP.

At least some of the above and other features of the invention are set out in the claims.

BRIEF DESCRIPTION OF THE DRAWINGS

The above and other aspects, features, and advantages of certain embodiments of the present disclosure may be more apparent from the following description taken in conjunction with the accompanying drawings, in which:

FIG. 1 is a block diagram schematically illustrating a wireless communication system, according to an example embodiment;
FIG. 2A is a diagram illustrating an example in which a common search space and a user specific search space overlap each other, according to an example embodiment;
FIG. 2B is a diagram illustrating an example in which the common search space and the user specific search space do not overlap each other, according to an example embodiment;
FIG. 3 is a block diagram of a base station, according to an example embodiment;
FIG. 4 is a block diagram of a terminal, according to an example embodiment;
FIG. 5A is a diagram of a basic structure of a time-frequency domain, which is a wireless resource area in a wireless communication system, according to an example embodiment;
FIG. 5B is a diagram of a slot structure in a wireless communication system, according to an example embodiment;
FIG. 5C is a diagram of an example of a control resource set (CORESET) in a wireless communication system, according to an example embodiment;
FIG. 5D is a diagram of a structure of a CORESET in a wireless communication system, according to an example embodiment;
FIG. 5E is a diagram showing an example in which a first memory becomes insufficient due to channel estimation of a third control channel element (CCE) being performed twice, according to an example embodiment;
FIG. 6 is a flowchart illustrating an operating method of a wireless communication system, according to an example embodiment;
FIG. 7 is a flowchart depicting an example embodiment of an operation of FIG. 6, according to an example embodiment;
FIG. 8 is a flowchart illustrating a specific dropping operation of a physical downlink control channel (PDCCH) candidate, unit according to an example embodiment;
FIG. 9 is a table diagram depicting a priority of FIG. 8, according to an example embodiment;
FIG. 10A is a flowchart illustrating a dropping operation of the PDCCH candidate unit, according to an example embodiment;
FIG. 10B is a diagram depicting the example operation of FIG. 10A, according to an example embodiment;
FIG. 11A is a flowchart illustrating a dropping operation of a CCE candidate unit, according to an example embodiment;
FIG. 11B is a diagram depicting the example operation of FIG. 11A, according to an example embodiment;

FIG. 12A is a flowchart illustrating an operating method of a terminal that additionally allocates a memory, according to an example embodiment;

FIG. 12B is a diagram depicting the example operation of FIG. 12A, according to an example embodiment;

FIG. 13A is a flowchart illustrating an operating method of the terminal, according to an example embodiment;

FIG. 13B is a diagram depicting the example operation of FIG. 13A, according to an example embodiment;

FIG. 14 is a flowchart illustrating an operating method of the terminal, according to an example embodiment;

FIG. 15 is a flowchart depicting an operating method of the terminal, according to an example embodiment;

FIG. 16 is a flowchart illustrating an operating method of the terminal, according to an example embodiment; and

FIG. 17 is a conceptual diagram of an Internet of Things (IoT) network system to which embodiments of the present disclosure may be applied.

## DETAILED DESCRIPTION

The following description with reference to the accompanying drawings is provided to assist in a comprehensive understanding of embodiments of the present disclosure defined by the claims and their equivalents. Various specific details are included to assist in understanding, but these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment.

It is understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein).

Hereinafter, various embodiments of the present disclosure are described with reference to the accompanying drawings.

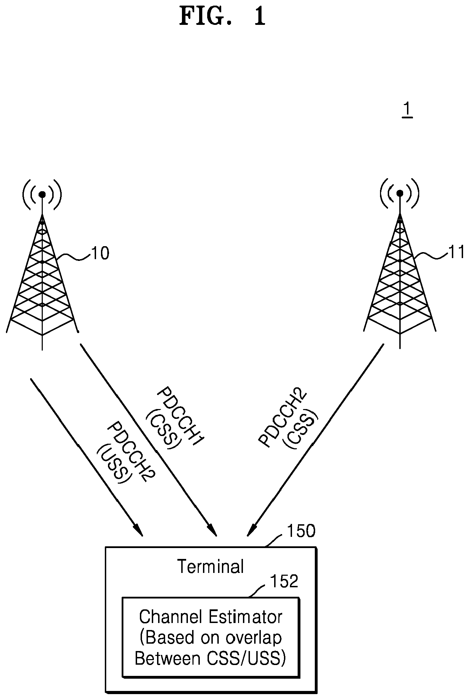

FIG. 1 is a block diagram schematically illustrating a wireless communication system 1, according to an example embodiment.

The wireless communication system 1 shown in FIG. 1 may be described herein as a new radio (NR) (and/or 5th generation (5G)) system is an example of the wireless communication system 1. However, the present disclosure is not limited in this regard. For example, the aspects described herein may be applied to other communication systems such as, but not limited to, cellular communication systems (e.g., 3rd generation (3G), 4th generation (4G), Long Term Evolution (LTE), LTE-advanced (LTE-A), wireless broadband (WiBro), global system for mobile communication (GSM)) short-range wireless communication systems (e.g., Bluetooth™, Bluetooth Low Energy (BLE), near field communication (NFC)), and the like. Notably, the aspects presented herein may be employed in any communication system having a similar technical background and channel form without departing from the scope of the present disclosure.

In addition, various functions described below may be implemented and/or supported by one or more computer programs. For example, each program thereof may be composed of a computer-readable program code and may be conducted in a computer-readable medium. The terms "application" and/or "program" may refer to a software component, an instruction set, procedures, functions, objects, classes, instances, related data, or some of things that may be suitable for implementation of a computer-readable program code. The term "computer-readable program code" may include all types of computer codes including, but not limited to, a source code, an object code, and an execution code. The term "computer-readable medium" may include all types of media that may be accessed by a computer, such as, but not limited to, a read only memory (ROM), a random access memory (RAM), a hard disk drive, a compact disk (CD), a digital video disk (DVD), and/or any other type of memory. A "nontransitory" computer-readable medium may exclude wired, wireless, optical, and/or other communication links that may transmit temporary electricity and/or other signals. The nontransitory computer-readable medium may include media on which data may be permanently stored, and/or media on which data may be stored and overwritten later, such as, but not limited to, a rewritable optical disc and/or an erasable memory device.

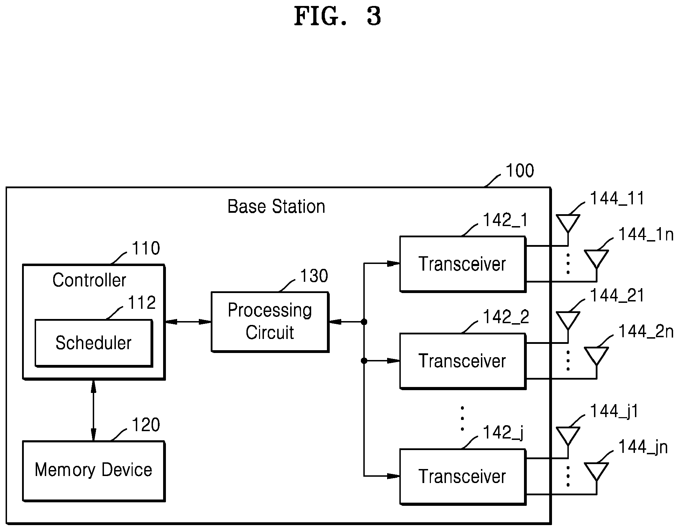

Referring to FIG. 1, the wireless communication system 1 may include a first transmission and reception point (TRP) 10, a second TRP 11, and a terminal 150. In an embodiment, a base station (e.g., base station 100 of FIG. 3) may include the first TRP 10 and the second TRP 11. For example, a cell, which may be operating based on at least one beam, may be serviced by the base station, which may consist of a plurality of TRPs (e.g., first TRP 10 and second TRP 11). As used herein, a TRP may refer to a block in which some functions of transmitting and receiving physical signals are separated in the base station, and may consist of a plurality of antennas. The base station may also be referred to as a Node B, an evolved Node B (eNB), a next generation Node B (gNB), an access point, a base transceiver station, a radio base station, a radio transceiver, a transceiver function, a basic service set (BSS), an extended service set (ESS), or some other suitable terminology.

In the present disclosure, although the first and second TRPs 10 and 11 may be described as transmitting physical downlink control channels (PDCCHs) to the terminal 150 to clarify the subject that transmits and/or receives the signal, it may be understood that the base station transmits the PDCCHs to the terminal 150 through the first and second TRPs 10 and 11. In addition, the present disclosure may describe embodiments of terminals 150 according to whether common search spaces and user specific search spaces overlap each other and embodiments of terminals 150 and/or base stations configured to perform resource scheduling so that the common search spaces and the user specific search spaces do not overlap each other, but it may be understood that the overlapping search spaces are not limited thereto. A common search space may be a search space that can be applied to multiple terminals. A user specific search space may be a search space that applies only to the terminal 150. That is, a common search space may carry downlink control information (DCI) that is common for all terminals, whereas a user specific search space may carry downlink control information DCI that is specifically allocated to the terminal 150.

In an example embodiment, the first TRP 10 may transmit a first PDCCH PDCCH1 arranged in a first control resource set (CORESET) to the terminal 150 based on a first transmission configuration indicator (TCI) state. Alternatively or additionally, the first TRP 10 may transmit a second PDCCH PDCCH2 arranged in a second CORESET to the terminal 150. In an optional or additional embodiment, the second TRP 11 may transmit the second PDCCH PDCCH2 arranged in the second CORESET to the terminal 150 based on a second TCI state.

As used herein, transmitting and/or receiving a signal based on a certain TCI state may refer to a signal that may be transmitted and/or received through a beam that may satisfy a certain TCI state. In addition, a CORESET may refer to a time-frequency configured resource in which the terminal 150 may attempt to decode PDCCH candidates in a plurality of search spaces. According to an embodiment, the size and location of the CORESET may be semi-statically set by a network (e.g., wireless communication system 1) in a time-frequency area (e.g., a time-frequency domain).

In an example embodiment, the terminal 150 may include a channel estimator 152. The channel estimator 152 may identify whether the common search spaces CSS and the user specific search spaces USS overlap each other, and may perform a channel estimation operation based on whether the search spaces are overlapped.

In an example embodiment, the channel estimator 152 may detect at least one overlapped third control channel element (CCE) in first CCEs included in the common search spaces CSS, and in second CCEs included in the user specific search spaces USS. As used herein, detecting the third CCE may refer to determining (e.g., identifying) the third CCE. In the present context, the terms "first", "second" and "third" are labels for distinguishing the first, second and third CCEs and need not indicate any particularly priority or order of the CCEs. The channel estimator 152 may determine object CCEs from the first CCEs and the second CCEs based on at least one determined third CCE. The third CCE may be determined (e.g., identified) as an overlapping CCE when the CCE overlaps with and/or is included in each of the common search space CSS and the user specific search space USS. In addition, the object CCEs may be referred to as CCEs that are objects of channel estimation. In an embodiment, the channel estimation value of each of the object CCEs may be stored in a previously allocated memory.

For example, the channel estimator 152 may perform channel estimation of at least one third CCE based on Equation 1 below, or an equation similar to Equation 1.

$$y = H_{TCI1} x_{CSS} + (H_{TCI1} + H_{TCI2}) x_{USS} \qquad [\text{Eq. } 1]$$

Referring to Eq. 1, $H_{TCI1}$ may represent a first channel that satisfies the first TCI state, and may correspond to a channel through which a first signal ($x_{CSS}$), which is included in the first PDCCH PDCCH1 and corresponds to the third CCE, propagates. A second channel ($H_{TCI1} + H_{TCI2}$) is a channel that satisfies a combination of the first TCI state and the second TCI state, and may correspond to a channel through which a second signal ($x_{USS}$), which is included in the second PDCCH PDCCH2 and corresponds to the third CCE, propagates. The channel estimator 152 may estimate the first channel ($H_{TCI1}$) to obtain the first signal ($x_{CSS}$), and may estimate the second channel ($H_{TCI1} + H_{TCI2}$) to obtain the second signal ($x_{USS}$). That is, there may be a case in which the channel estimator 152 may need to perform channel estimation twice regarding the third CCE and to store an estimation value of the first channel ($H_{TCI1}$) and an estimation value of the second channel ($H_{TCI1} + H_{TCI2}$). As used herein, the estimation value of the channel may be referred to as a channel estimation value and/or a result of channel estimation. A channel estimation value and/or a result of channel estimation may represent channel state characteristics (e.g. channel state information).

According to a 3rd Generation Partnership Project (3GPP) standard, the CCEs included in the PDCCH candidates may correspond to non-overlapped CCEs. In addition, according to the 3GPP standard, the non-overlapped CCEs, the third CCE corresponding to the first channel ($H_{TCI1}$), and the third CCE corresponding to the second channel ($H_{TCI1} + H_{TCI2}$) may not be determined as other non-overlapped CCEs, and may be determined as a single non-overlapped CCE. In an embodiment, the size of the memory allocated for channel estimation of the slot may be determined based on the maximum number (e.g., threshold) of non-overlapped CCEs per slot. That is, the size of the memory may be determined to store channel estimation values that satisfy the maximum number (e.g., threshold) of non-overlapped CCEs per slot. However, in the case of the third CCE, because two channel estimation values may be stored due to the performing of channel estimation operation twice regardless of the non-overlapped CCE being counted as one CCE, the allocated memory may be insufficient.

In order to potentially prevent the insufficient allocation of memory as described above, the channel estimator 152 may determine the object CCEs from the first CCEs and the second CCEs based on the at least one determined third CCE.

In a first example embodiment, the channel estimator 152 may determine the object CCEs by performing dropping of PDCCH candidate units and/or CCE units so that channel estimation of the at least one determined third CCE may be performed only once. For example, a dropping operation for a specific CCE may be referred to as an operation of excluding the specific CCE from the object CCEs that are the objects of channel estimation.

In a second example embodiment, the channel estimator 152 may determine the object CCEs so that channel estimation of at least one determined third CCE is performed twice, and additional memory may be allocated to the current allocated memory. In some embodiments, when additional memory is allocated to the current allocated memory, the channel estimator 152 may increase the maximum number (e.g., threshold) of non-overlapped CCEs per slot.

In a third example embodiment, the channel estimator 152 may identify the determined third CCE included in the first CCEs and the determined third CCE included in the second CCEs and count the at least one determined third CCE as two non-overlapped CCEs. The channel estimator 152 may perform dropping of PDCCH candidate units and/or CCE units based on the number of counted non-overlapped CCEs to determine the object CCEs, or may not perform dropping and determine the object CCEs, and may adaptively allocate additional memory to the current allocated memory.

In a fourth example embodiment, the channel estimator 152 may, based on system information received from the base station, detect the overlapped third CCE from the first CCEs included in the common search space and based on the single TCI state (e.g., the first TCI state) and the second CCEs included in the user specified search space and based on the multiple TCI states (e.g., the first TCI state and the second TCI state). The channel estimator 152 may identify whether a first memory used for channel estimation of the first CCEs and the second CCEs is insufficient based on the number of non-overlapped CCEs in the first CCEs and the second CCEs. The channel estimator 152 may count the number of non-overlapped CCEs from the first CCEs and the second CCEs, and the third CCE may be counted as two non-overlapped CCEs. Based on an identification result, the channel estimator 152 may perform at least one of a first channel estimation regarding the third CCE based on the single TCI state and a second channel estimation regarding the third CCE based on the multiple TCI states.

For example, the channel estimator 152 may identify that the first memory may be insufficient when the number of non-overlapped CCEs exceeds the maximum number (e.g., threshold) of non-overlapped CCEs per slot. Consequently, the channel estimator 152 may perform only one of the first channel estimation or the second channel estimation. In another particular example, the channel estimator 152 may identify that the first memory is insufficient when the number of non-overlapped CCEs exceeds the maximum number of non-overlapped CCEs per slot, and, in this case, the channel estimator 152 may additionally allocate a second memory to perform the first channel estimation and the second channel estimation, and may store a first channel estimation result and a second channel estimation result in the first memory and the second memory.

However, the embodiments above are only example embodiments, and the present disclosure is not limited thereto. For example, the channel estimator 152 may detect at least one third CCE included in an overlapping space between the common search spaces CSS and the user specific search spaces USS, and may perform various channel estimation operations based on the detection result.

For ease of description and to clarify the subject of the operation according to example embodiments of the present disclosure, an example of including a channel estimator 152 in the terminal 150 is illustrated in FIG. 1. However, the present disclosure is not limited thereto, and the operation of the channel estimator 152 may be understood as the operation of the terminal 150. For example, in some embodiments, the channel estimator 152 may be implemented as an integrated circuit, as software executed by a controller and/or processor included in the terminal 150, and/or a combination of circuits and software.

In an example embodiment, the terminal 150 may perform blind decoding of the plurality of first PDCCH candidates included in the plurality of common search spaces by using the channel estimation values regarding the non-overlapped CCEs of the first CORESET. The terminal 150 may obtain the first PDCCH PDCCH1 from a blind decoding result and extract a first downlink control information (DCI) from the first PDCCH PDCCH1.

In an example embodiment, the terminal 150 may perform blind decoding of the plurality of second PDCCH candidates included in the plurality of user specific search spaces by using the channel estimation values regarding the non-overlapped CCEs of the second CORESET. The terminal 150 may obtain the second PDCCH PDCCH2 from a blind decoding result and extract a second DCI from the second PDCCH PDCCH2.

In an example embodiment, the terminal 150 may receive a first PDSCH from the first TRP 10 based on the first DCI. Alternatively or additionally, the terminal 150 may receive a second PDSCH from the first TRP 10 and the second TRP 11, based on the second DCI.

According to an example embodiment, the terminal 150 may determine whether the common search spaces and the user specific search spaces overlap each other, perform channel estimation operation based on the determination result to prevent a case in which the memory previously allocated for channel estimation is insufficient. As a result, the terminal 150 may provide a reliable communication service to a user by supporting stable multiple TCI states, when compared to related terminals of wireless communication systems.

Notably, aspects of the present disclosure may be applied an overlapping space between search spaces of a certain CORESET and search spaces of other CORESETs, in addition to the example embodiments related to an overlapping space between the common search spaces CSS and the user specific search spaces USS. For example, a certain CORESET may be CORESET0, which may be provided by a master information block (MIB), and another CORESET may correspond to a portion of an initial bandwidth setting provided by the MIB.

Furthermore, it may be understood that the present disclosure may be applied to a case in which search spaces to which the single TCI state is applied and search spaces to which the multiple TCI state is applied overlap each other.

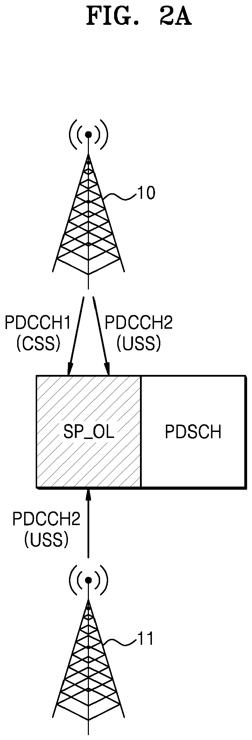

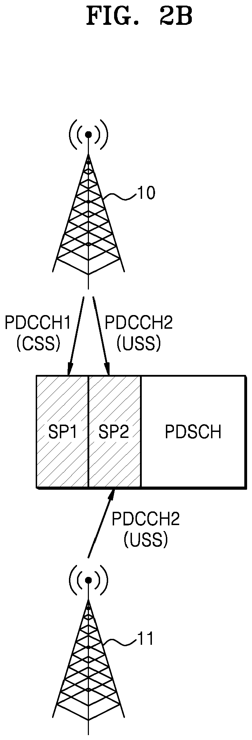

FIG. 2A is a diagram illustrating an example in which a common search space CSS and a user specific search space USS overlap each other, according to an example embodiment. FIG. 2B is a diagram illustrating an example in which the common search space CSS and the user specific search space USS do not overlap each other, according to an example embodiment.

Referring to FIG. 2A, the first TRP 10 may transmit a first PDCCH PDCCH1 arranged in the first CORESET to the terminal 150 based on the first TCI state, and may transmit a second PDCCH PDCCH2 arranged in the second CORESET to the terminal 150 based on the first TCI state. The second TRP 11 may transmit the second PDCCH PDCCH2 arranged in the second CORESET to the terminal 150 based on the second TCI state. The common search space CSS of the first CORESET may overlap the user specific search space USS of the second CORESET in an overlapping space SP_OL.

In an example embodiment, the overlapping space SP_OL may include the third CCE. The terminal 150 may detect the third CCE and perform a channel estimation operation based on the detected third CCE. In some embodiments, the terminal 150 may receive information regarding the first CORESET and/or information regarding the second CORESET from the base station (and/or the first TRP 10 and the second TRP 11) to detect the overlapped third CCE.

Referring to FIG. 2B, the first TRP 10 and the second TRP 11 may transmit the first PDCCH PDCCH1 and the second PDCCH PDCCH2 so that the common search space CSS and the user specific search space USS do not overlap each other. In an example embodiment, a first space SP1 may include the common search space CSS, and a second space SP2 may include the user specific search space USS.

In an example embodiment, the base station, including the first TRP 10 and the second TRP 11, may perform resource scheduling for the first PDCCH PDCCH1 and the second PDCCH PDCCH2 so that the common search space CSS and the user specific search space USS do not overlap each other.

In this case, the terminal 150 may identify in advance the common search space CSS and the user specific search space USS that are resource-scheduled so as not to overlap with each other through radio resource control (RRC) signaling and/or medium access control (MAC) control element (CE), and may perform the channel estimation operation based thereon. That is, the resource scheduling operation performed by the base station, as shown in FIG. 2B, may allow the terminal 150 to quickly perform the channel estimation operation without considering whether the common search space CSS and the user specific search space USS overlap each other.

FIG. 3 is a block diagram of a base station 100, according to an example embodiment.

Referring to FIG. 3, the base station 100 may include a controller 110, a memory device 120, a processing circuit 130, a plurality of transceivers (e.g., first transceiver 142_1 to j-th transceiver 142_j, where j is a positive integer greater than zero (0), and generally referred to herein as "plurality of transceivers 142"), and a plurality of antennas (e.g., first antenna 144_11 to jn-th antenna 144_jn, where j and n are positive integers greater than zero (0), and generally referred to herein as "plurality of antennas 144"). The plurality of transceivers 142 may receive radio frequency (RF) signals transmitted from the terminal 150 to the plurality of antennas 144. The plurality of transceivers 142 may frequency down-convert the received RF signals to provide intermediate frequency (IF) or baseband signals. The processing circuit 130 may provide data signals by filtering, decoding and/or digitizing the IF and/or baseband signals. Alternatively or additionally, the controller 110 may process data signals. For example, the controller 110 may perform signal pre-processing on the data signals, and may provide the pre-processed signals to the processing circuit 130.

In an embodiment, the processing circuit 130 may receive data signals from the controller 110. The processing circuit 130 may perform encoding, multiplexing, and/or may convert to analog the received data signals. The plurality of transceivers 142 may frequency up-convert the IF and/or baseband signals output from the processing circuit 130 to RF signals and may transmit the RF signals to the terminal 150 through the plurality of antennas 144.

The controller 110 may control the base station 100 for NR network-based communication. In an example embodiment, the controller 110 may form the first TRP 10 and the second TRP 11 by using the plurality of transceivers 142 and the plurality of antennas 144. The controller 110 may control the base station 100 to transmit the first PDCCH PDCCH1 to the terminal 150 through the first TRP 10 based on the first TCI state, transmit the second PDCCH PDCCH2 to the terminal 150 through the first TRP 10 based on the first TCI state, and/or transmit the second PDCCH PDCCH2 to the terminal 150 through the second TRP 11 based on the second TCI state.

In an example embodiment, the controller 110 may include a scheduler 112. The scheduler 112 may configure first search spaces for the terminal 150 to search for the first PDCCH PDCCH1 as the common search space, and may configure second search spaces for the terminal 150 to search for the second PDCCH PDCCH2 as the user specific search space. In an embodiment, the scheduler 112 may resource-schedule the first search spaces and the second search spaces so as not to overlap each other. The scheduler 112 may inform the terminal 150 in advance that the first search spaces and the second search spaces may not overlap each other. Example embodiments of the scheduler 112 described above may be associated with embodiments described with reference to FIG. 2B.

The controller 110 may execute a program and/or process stored in the memory device 120 to perform a control operation of the overall base station 100. In some embodiments, the scheduler 112 may be stored in the memory device 120 in the form of a program code that may be executed to perform the resource scheduling operation in accordance with embodiments described herein, and the controller 110 may access the memory device 120 to execute the stored program code. Accordingly, the operation of the scheduler 112 may be performed.

The number and arrangement of components of the base station 100 shown in FIG. 3 are provided as an example. In practice, there may be additional components, fewer components, different components, or differently arranged components than those shown in FIG. 3. Furthermore, two or more components shown in FIG. 3 may be implemented within a single component, or a single component shown in FIG. 3 may be implemented as multiple, distributed components. Alternatively or additionally, a set of (one or more) components shown in FIG. 3 may be integrated with each other, and/or may be implemented as an integrated circuit, as software, and/or a combination of circuits and software.

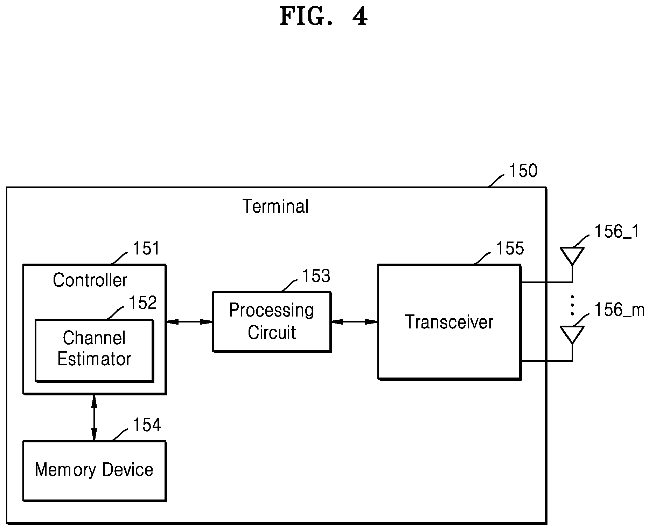

FIG. 4 is a block diagram of a terminal 150, according to an example embodiment.

Referring to FIG. 4, the terminal 150 may include a controller 151, a processing circuit 153, a memory device 154, a transceiver 155, and a plurality of antennas (e.g., first antenna 156_1 to m-th antenna 156_m, where m is a positive integer greater than zero (0), and generally referred to herein as "plurality of antennas 156").

The transceiver 155 may receive the RF signals transmitted by the base station 100 through the plurality of antennas 156. The transceiver 155 may down-convert the received RF signals to provide IF and/or baseband signals. The processing circuit 153 may provide data signals by filtering, decoding and/or digitizing the IF and/or baseband signals. Alternatively or additionally, the controller 151 may process the data signals. For example, the controller 151 may perform signal pre-processing on the data signals, and may provide the pre-processed signals to the processing circuit 153.

In an embodiment, the processing circuit 153 may receive the data signals from the controller 151. The processing circuit 153 may perform encoding, multiplexing, and/or convert to analog the received data signals. The transceiver 155 may frequency up-convert the IF and/or baseband signals output from the processing circuit 153 to RF signals and transmit the RF signals to the base station 100 through the plurality of antennas 156.

The controller 151, according to an example embodiment, may control the terminal 150 to perform NR network-based communication. For example, the controller 151 may include the channel estimator 152, which may be configured to perform channel estimation operation for obtaining the first PDCCH PDCCH1 received from the first TRP 10 of the base station 100 and the second PDCCH PDCCH2 received from the first TRP 10 and the second TRP 11 of the base station 100.

In an example embodiment, the channel estimator 152 may detect whether the first search spaces for searching for the first PDCCH PDCCH1 and the second search spaces for searching for the second PDCCH PDCCH2 overlap each other. The channel estimator 152 may perform the channel estimation operation based on the detection result.

In an example embodiment, when the channel estimator 152 detects at least one overlapped third CCE in the first CCEs included in the first search spaces and the second CCEs included in the second search spaces (e.g. included in both the first CCEs and the second CCEs), the channel estimator 152 may determine object CCEs from the first CCEs and the second CCEs based on the detected at least one third CCE. The channel estimator 152 may perform channel estimation of the object CCEs by using a first memory of the memory device 154.

In some embodiments, the channel estimator 152 may perform dropping of PDCCH candidate units and/or CCE units so that the number of the object CCEs may become less than or equal to the maximum number (e.g., threshold) of non-overlapped CCEs per slot, or may not perform dropping and may additionally allocate a second memory of the memory device 154 to perform the channel estimation operation of the object CCEs. In some embodiments, the first memory and second memory may be memory spaces of the memory device 154 allocated in advance for channel estimation and/or blind decoding in different carrier aggregations (CA).

That is, the channel estimator 152 may limit the object CCEs and/or additionally allocate the second memory so that the first memory allocated for channel estimation of the first CCEs and the second CCEs may be sufficient to perform the channel estimation. However, the above embodiment is a non-limiting example embodiment and the present disclosure is not limited thereto. That is, the channel estimator 152 may perform various channel estimation operations to prevent insufficiency of the memory that may be caused by overlapping of the first search spaces and the second search spaces.

The controller 151 may execute a program and/or process stored in a program memory (not shown) to perform a control operation of the overall terminal 150. In some embodiments, the channel estimator 152 may be stored in the program memory in the form of a program code that runs to perform the channel estimation operation according to an example embodiment, and the controller 151 may access the program memory to run the stored program code. Accordingly, the operation of the channel estimator 152 may be performed. In some embodiments, the program memory may be included in the memory device 154.

The number and arrangement of components of the terminal 150 shown in FIG. 4 are provided as an example. In practice, there may be additional components, fewer components, different components, or differently arranged components than those shown in FIG. 4. Furthermore, two or more components shown in FIG. 4 may be implemented within a single component, or a single component shown in FIG. 4 may be implemented as multiple, distributed components. Alternatively or additionally, a set of (one or more) components shown in FIG. 4 may be integrated with each other, and/or may be implemented as an integrated circuit, as software, and/or a combination of circuits and software.

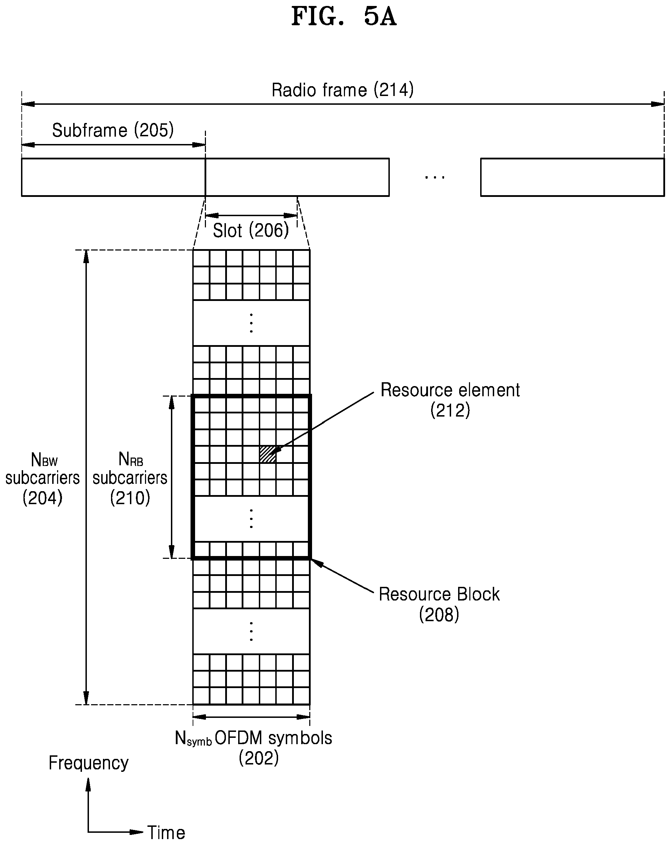

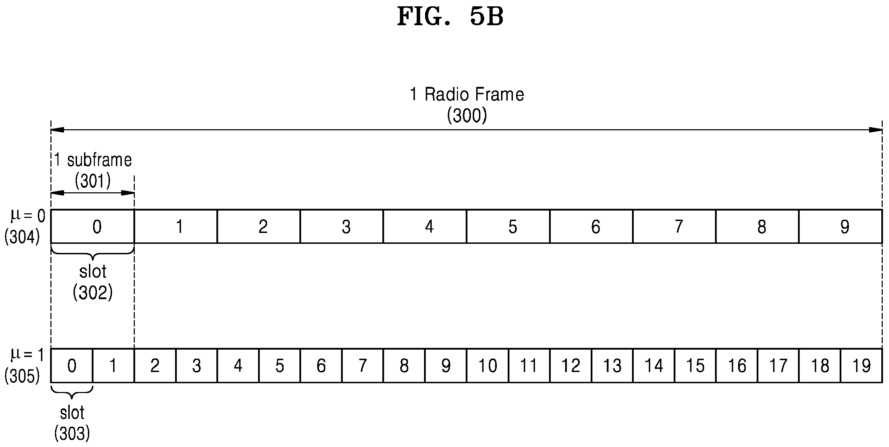

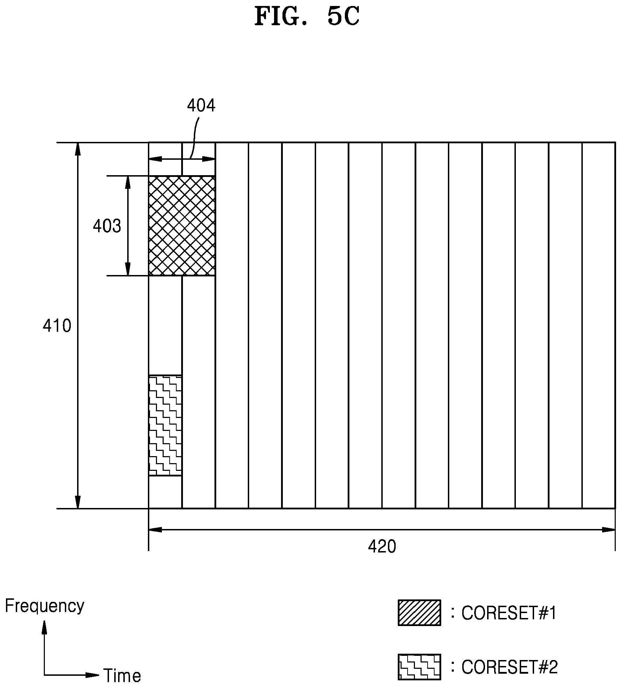

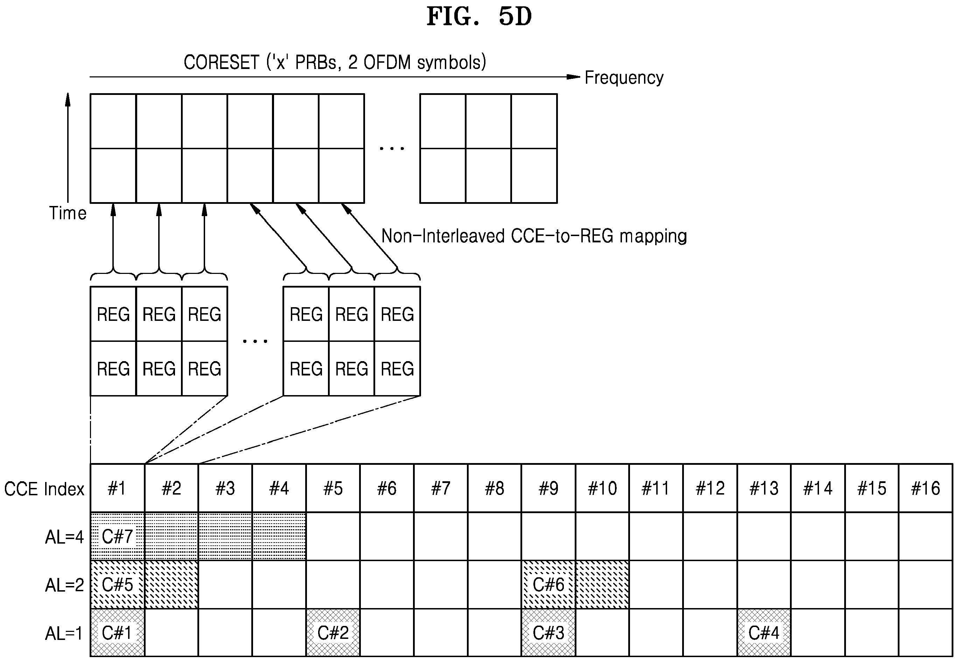

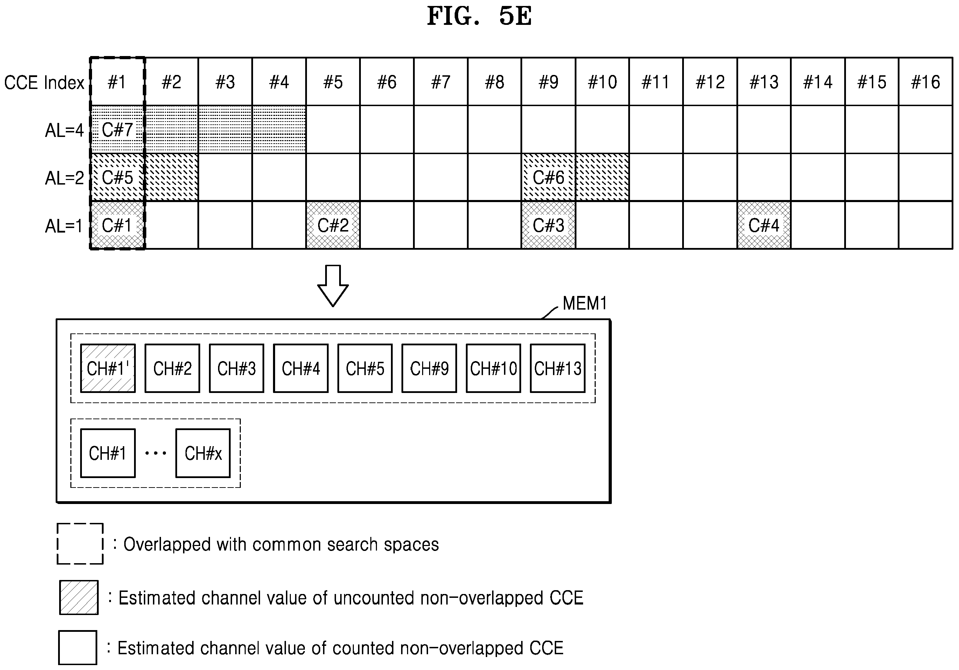

FIG. 5A is a diagram of a basic structure of a time-frequency domain, which is a wireless resource area in a wireless communication system 1, according to an example embodiment. FIG. 5B is a diagram of a slot structure in the wireless communication system 1, according to an example embodiment. FIG. 5C is a diagram of an example of a CORESET in the wireless communication system 1, according to an example embodiment. FIG. 5D is a diagram of a structure of a CORESET in the wireless communication system 1, according to an example embodiment. FIG. 5E is a diagram of an example of insufficiency of a first memory MEM1 due to the channel estimation of the third CCE being performed twice, according to an example embodiment.

Referring to FIG. 5A, the horizontal axis may represent a time domain, and the vertical axis may represent a frequency domain. In an embodiment, a minimum transmission unit in the time domain may be an orthogonal frequency division multiplexing (OFDM) symbol. As shown in FIG. 5A, $N_{symb}$ OFDM symbols 202 (e.g., $N_{symb}$=14) may constitute a single slot 206. A number of slots (e.g. two slots) may constitute a single subframe 205. For example, the length of the slot 206 may be 0.5 milliseconds (ms), and the length of the subframe 205 may be 1.0 ms. However, in an example embodiment, the length of the slot 206 may vary according to the configuration of the slot 206, and the number of slots 206 included in the subframe 205 may vary according to the length of the slot 206. In an NR network, the time-frequency domain may be defined with respect to the slot 206. Alternatively or additionally, a radio frame 214 may be a unit of the time domain consisting of ten subframes 205.

In an embodiment, a minimum transmission unit in the frequency domain may be a subcarrier. For example, the bandwidth of a whole system transmission band may consist of a total of $N_{BW}$ subcarriers 204. The basic unit of resources in the time-frequency domain, which is a resource element (RE) 212, may be represented by an OFDM symbol index and a subcarrier index. A resource block (RB) 208 may be referred to as a block of continuous $N_{symb}$ OFDM symbols 202 in the time domain and a block of continuous $N_{RB}$ subcarriers 210 in the frequency domain. Thus, one RB 208 may consist of ($N_{symb} \times N_{RB}$) REs 212. An RB pair may be a unit for two RBs in concatenation with respect to a time axis and may consist of ($N_{symb} \times 2N_{RB}$) REs 212.

The memory, which may be used for channel estimation, may be allocated in advance to have a size that may satisfy the maximum number (e.g., threshold) of non-overlapped CCEs included in one slot 206. The plurality of memories allocated in the above manner may be used to perform channel estimation and/or blind decoding in various CAs.

Referring to FIG. 5B, a single radio frame 300 may be defined as 10 ms, a subframe 301 may be defined as 1 ms, and the radio frame 300 may include a total of ten subframes 301. One slot (e.g., slot 302 or slot 303) may include fourteen (14) OFDM symbols (e.g., $N_{symb}= 14$). One subframe 301 may consist of one slot or a plurality of slots (e.g., slots 302 and slots 303). As shown in FIG. 5B, the number of slots 302 and 303 per subframe 301 may vary according to the set value μ 304 and 305 regarding a subcarrier spacing and the number of symbols included in the slot 302 or 303. As shown in FIG. 5B, cases in which the subcarrier spacing set value is zero (0) (e.g., μ = 0) 304 and the subcarrier spacing set value is one (1) (e.g., μ = 1) 305 are shown. One subframe 301 may include one slot 302 when the subcarrier spacing set value is zero (0) (e.g., μ = 0) 304, and one subframe 301 may include two slots 303 when the subcarrier spacing set value is one (1) (e.g., μ = 1) 305.

As described above, the number of slots per subframe may vary according to the subcarrier spacing set value μ. Accordingly, the number of slots per frame may also vary according to the subcarrier spacing set value μ. For example, the number of slots per subframe ( $N_{slot}^{subframe,\mu}$ ) and the number of slots per frame ( $N_{slot}^{frame,\mu}$ ) according to different subcarrier spacing set values μ may be defined as shown in Table 1.

**Table 1: Slot Configurations by Subcarrier Spacing Value**

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In addition, in some embodiments, the number of slots per subframe may vary according to the number of symbols included in one slot. Alternatively or additionally, the number of slots per subframe may vary according to the set value μ. For example, assuming that there are 14 symbols/slot (e.g., $N_{symb}^{slot}=14$ ), there may be $2^{\mu}$ slots per subframe, where the set value μ may be any one of 0, 1, 2, 3, and 4. For another example, the subcarrier spacing may be equal to $2^{\mu} \times 15$ kHz. That is, the subcarrier spacing values may be 15 kHz, 30 kHz, 60 kHz, 120 kHz, and 240 kHz, respectively.

The maximum number (e.g., threshold) of non-overlapped CCEs per slot may vary according to the subcarrier spacing set value μ. Consequently, as the maximum number (e.g., threshold) of non-overlapped CCEs per slot varies, the size of the memories allocated in advance for channel estimation and/or blind decoding may be controlled.

Referring to FIG. 5C, two CORESETs (e.g., first CORESET#1 and second CORESET#2) may be set in a whole bandwidth 410 with respect to the frequency axis and in one slot 420 with respect to the time axis. The CORESETs CORESET#1 and CORESET#2 may be set in a certain frequency resource 403 within the bandwidth 410 with respect to the frequency axis. The CORESETs CORESET#1 and CORESET#2 may be set as one OFDM symbol or as a plurality of OFDM symbols with respect to the time axis. The OFDM symbols may have a duration 404 of the CORESETs CORESET#1 and CORESET#2. For example, the first CORESET CORESET#1 may be set as the duration of two symbols, and the second CORESET CORESET#2 may be set as the duration of one symbol.

The base station 100 may arrange the PDCCH in any one of the CORESETs CORESET#1 and CORESET#2 and transmit the PDCCH to the terminal 150. The terminal 150 may receive system information that indicates a position of the CORESETs CORESET#1 and CORESET#2 from the base station 100, and, based on the system information, may perform blind decoding of the plurality of PDCCH candidates included in the CORESETs CORESET#1 and CORESET#2 to obtain the PDCCH. The terminal 150 may perform channel estimation of the CCEs included in the plurality of PDCCH candidates before performing blind decoding, and may perform blind decoding by using the channel estimation values of the CCEs.

Referring to FIG. 5D, the CORESET may include 'x' physical resource blocks (PRBs) with respect to the frequency axis and may include two OFDM symbols with respect to the time axis. That is, the CORESET may include a plurality of resource element groups (REG), and two REGs may constitute an REG bundle. For example, the REG may include twelve resource elements with respect to the frequency axis and one OFDM symbol with respect to the time axis. The CCE may include six REGs. Non-interleaved CCE-to-REG mapping may be applied to REGs included in CCEs #1 to #16. In some embodiments, interleaved CCE-to-REG mapping may be applied to REGs included in CCEs #1 to #16.

A junction level AL may refer to the number of CCEs allocated for the PDCCH. In an embodiment, the number of PDCCH candidates may vary according to the junction level AL. For example, when the junction level AL is 1, CCE#1, CCE#5, CCE#9, and CCE#13 may be included in the PDCCH candidates C#1, C#2, C#3, and C#4, respectively. When the junction level AL is 2, CCE#1 and CCE#2 may be included in the PDCCH candidate C#5, and CCE#9 and CCE#10 may be included in the PDCCH candidate C#6. When the junction level AL is 4, CCE#1, CCE#2, CCE#3, and CCE#4 may be included in the PDCCH candidate C#7. The PDCCH candidates may refer to the object for blind decoding for the terminal 150 to receive the PDCH (and/or to extract a DCI from the PDCCH) transmitted from the base station 100, and the junction level AL may be related to a search space configuration. For example, the search space may include PDCCH candidates that may be present at one junction level. A plurality of search spaces may be present in one CORESET, and a plurality of CORESETs may be configured from the base station 100. Thus, information regarding the CORESETs may be transmitted to the terminal 150.

Referring to FIG. 5E, it may be assumed that the PDCCH candidates C#1 to C#7 are included in the user specific search spaces, and that the user specific search spaces and the common search spaces overlap each other in CCE#1. Alternatively or additionally, the multiple TCI states may be applied to the user specific search spaces, and the single TCI state may be applied to the common search spaces. For example, the CCE#1 may correspond to the overlapped third CCE described above. For another example, the PDCCH candidates C#1 to C#7 of user specific search spaces may be referred to as second PDCCH candidates, and the PDCCH candidates of common search spaces may be referred to as first PDCCH candidates.

The terminal 150 may perform channel estimation of CCE#1, CCE#2, CCE#3, CCE#4, CCE#5, CCE#9, CCE#10, and CCE#13 to perform blind decoding of the second PDCCH candidates C#1 to C#7 of the user specific search spaces. The terminal 150 may store channel estimation values CH#1', CH#2, CH#3, CH#4, CH#5, CH#9, CH#10, and CH#13 corresponding to CCE#1, CCE#2, CCE#3, CCE#4, CCE#5, CCE#9, CCE#10, and CCE#13, respectively, in the first memory MEM1.

In an embodiment, the terminal 150 may perform channel estimation of the CCEs to perform blind decoding of the PDCCH candidates of the common search spaces. In such an embodiment, the terminal 150 may store the channel estimation values CH#1 to CH#x corresponding to the CCEs in the first memory MEM1, where x is a positive integer greater than zero (0).

In related channel estimation operations, the CCE#1, which may be the overlapped third CCE, may be counted as one non-overlapped CCE. However, the related channel estimation operation based on the multiple TCI states and the related channel estimation operation based on the single TCI state may be performed regarding CCE#1. For example, a channel estimation result based on the multiple TCI states regarding CCE#1 may correspond to CH#1', and a channel estimation result based on the single TCI state regarding CCE#1 may correspond to CH#1. Consequently, the first memory MEM1 may need to store CH#1, which may not have been considered in a size determination of MEM1, and as a result, spaces to store the channel estimation values of other CCEs may be insufficient.

In an example embodiment, the terminal 150 may determine the presence of the overlapped third CCE (e.g., CCE#1), and may perform, based on the third CCE, dropping of some CCEs from the object CCEs that are objects of channel estimation in order to control the number of the channel estimation values of the CCEs stored in the first memory MEM1, according to the size of the first memory MEM1.

In other example embodiments, the terminal 150 may additionally allocate a second memory based on the third CCE to store the channel estimation values of the CCEs in the first memory MEM1 and/or the second memory without performing dropping of the CCEs.

It is to be understood that the example shown in FIG. 5E is only an example embodiment, and that the present disclosure is not limited thereto. That is, the embodiments shown in FIG. 5E may be applied to various examples of the user specific search spaces overlapping the common search spaces.

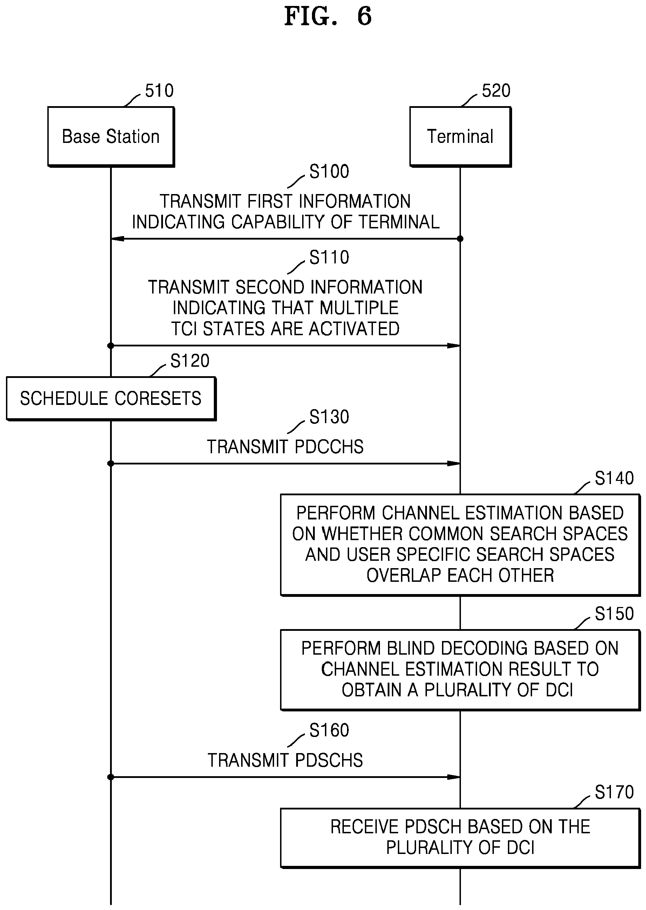

FIG. 6 is a flowchart illustrating an operating method of a wireless communication system 1, according to an example embodiment.

The terminal 520 of FIG. 6 may include or may be similar in many respects to the terminal 150 described above with reference to FIGS. 1 to 5E, and may include additional features not mentioned above. Furthermore, the base station 510 may include or may be similar in many respects to the base station 100 described above with reference to FIGS. 3 to 5E and may include additional features not mentioned above.

Referring to FIG. 6, in operation S100, the terminal 520 may transmit first information indicating the capability of the terminal 520 to the base station 510. The first information may be referred to as capability information. In an example embodiment, the first information may include information indicating whether the terminal 520 may support the multiple TCI states through the multiple TCIs. That is, the first information may indicate whether the terminal 520 may support simultaneous activation of the multiple TCI states regarding one CORESET. For example, as part of "NR FeMIMO maintenance on high speed train (HST)" in Release 17 of the 3GPP standard, a function may be defined in which the terminal 520 may receive the PDCCH according to a single frequency network (SFN) from the base station 510 through the multiple TRPs. Alternatively or additionally, the first information may include information indicating whether the terminal 520 may support the function.

In operation S110, the base station 510 may transmit, to the terminal 520, second information indicating that the multiple TCI states are activated. In an example embodiment, the base station 510 may activate a method of using the multiple TCI states through the multiple TRPs based on the received first information, and the second information may include information indicating that the method is activated. In an example embodiment, the second information may be transmitted through RRC signaling and/or MAC CE.

In operation S120, the base station 510 may schedule the CORESETs. For example, the base station 510 may determine the position of the CORESETs including the user specific search spaces and the CORESETs including the common search spaces, and the CORESETs in which the PDCCH are arranged. Scheduling information regarding the CORESETs may be transmitted in advance to the terminal 520.

In operation S130, the base station 510 may transmit the PDCCHs to the terminal 520. For example, the base station 510 may transmit the first PDCCH PDCCH1 to the terminal 520 through the first TRP 10 based on the first TCI state, transmit the second PDCCH PDCCH2 to the terminal 520 through the first TRP 10 based on the first TCI state, and transmit the second PDCCH PDCCH2 to the terminal 520 through the second TRP 11 based on the second TCI state.

In operation S140, the terminal 520 may perform channel estimation based on whether the common search spaces and the user specific search spaces overlap each other. In an example embodiment, the common search spaces may be spaces that are searched to obtain the first PDCCH PDCCH1, and the user specific search spaces may be spaces that are searched to obtain the second PDCCH PDCCH2. The terminal 520 may identify whether the common search spaces and the user specific search spaces overlap each other based on the scheduling information regarding the CORESETs received from the base station 510.

In operation S150, the terminal 520 may perform blind decoding based on the channel estimation result to extract DCIs. For example, the terminal 520 may perform blind decoding for the first PDCCH candidates of the common search spaces to obtain the first PDCCH PDCCH1, and obtain the first DCI from the first PDCCH PDCCH1. Particularly, the terminal 520 may perform blind decoding for the second PDCCH candidates of the user specific search spaces to obtain the second PDCCH PDCCH2, and obtain the second DCI from the second PDCCH PDCCH2.

In operation S160, the base station 510 may transmit the PDSCHs to the terminal 520. For example, the base station 510 may transmit the first PDSCH to the terminal 520 through the first TRP 10 based on a third TCI state, transmit the second PDSCH to the terminal 520 through the first TRP 10 based on the third TCI state, and transmit the second PDSCH to the terminal 520 through the second TRP 11 based on a fourth TCI state. In some embodiments, the first TCI state may be identical to the third TCI state, and the second TCI state may be identical to the fourth TCI state.

In operation S170, the terminal 520 may receive the PDSCHs based on the DCIs. For example, the terminal 520 may receive the first PDSCH based on the first DCI and receive the second PDSCH based on the second DCI.

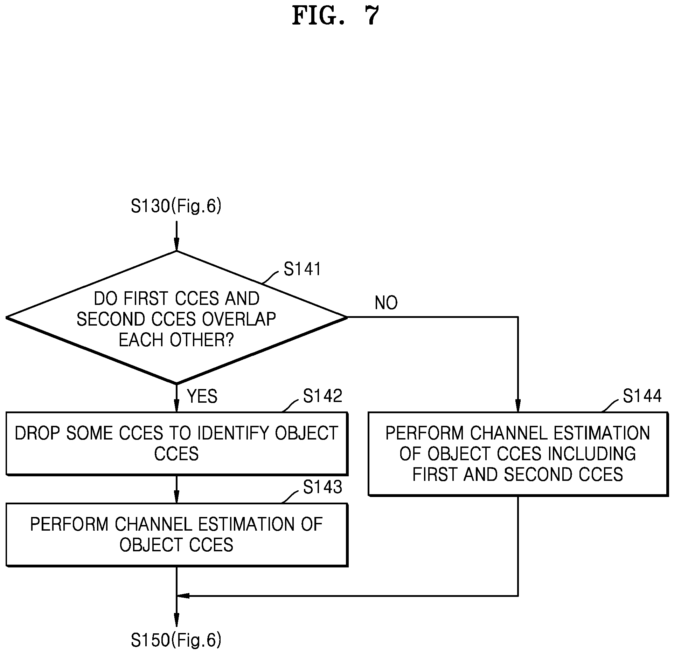

FIG. 7 is a flowchart depicting an example embodiment of operation S140 of FIG. 6, according to an example embodiment. Hereinafter, it may be assumed that the first CCEs are CCEs included in the first PDCCH candidates of the common search spaces, that the second CCEs are CCEs included in the second PDCCH candidates of the user specific search spaces, and that the third CCE is a CCE overlapped between the first CCEs and the second CCEs.

Referring to FIG. 7, in operation S141, the terminal 520 may identify whether the first CCEs and the second CCEs overlap with each other.

When operation S141 is 'YES', operation S141 may be followed by operation S 142, and the terminal 520 may perform dropping of some CCEs to determine the object CCEs. For example, the terminal 520 may drop some CCEs from the object CCE by PDCCH candidate units. Alternatively or additionally, the terminal 520 may drop some CCEs from the object CCE by CCE units.

In operation S143, the terminal 520 may perform channel estimation of the object CCEs.

When operation S141 is 'NO', operation S141 may be followed by operation S144, and the terminal 520 may perform channel estimation of the object CCEs including the first and second CCEs.

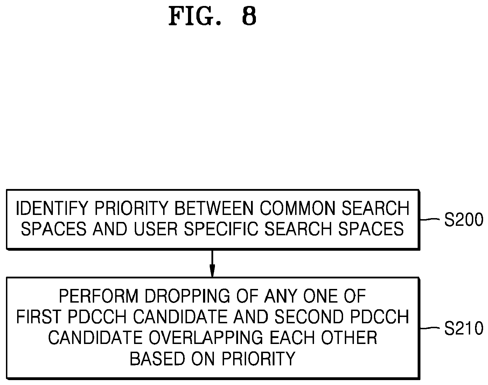

FIG. 8 is a flowchart illustrating the dropping operation of the PDCCH candidate unit, according to an example embodiment. Hereinafter, the first PDCCH candidate may refer to one of the first PDCCH candidates of the common search spaces, and the second PDCCH candidate may refer to one of the second PDCCH candidates of the user specific search spaces.

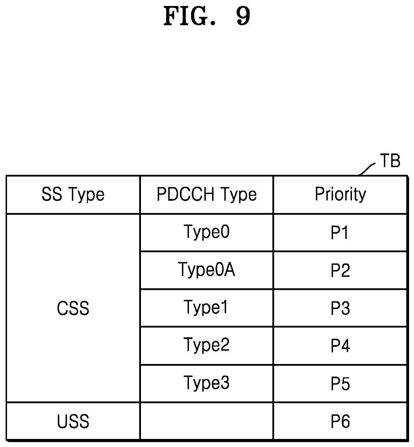

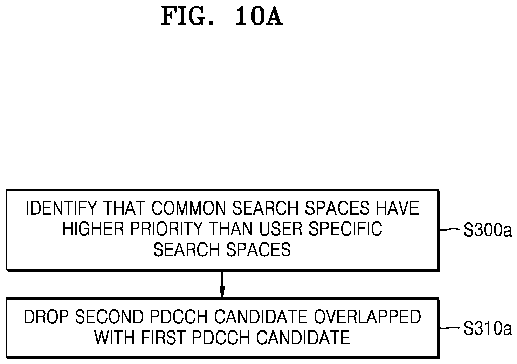

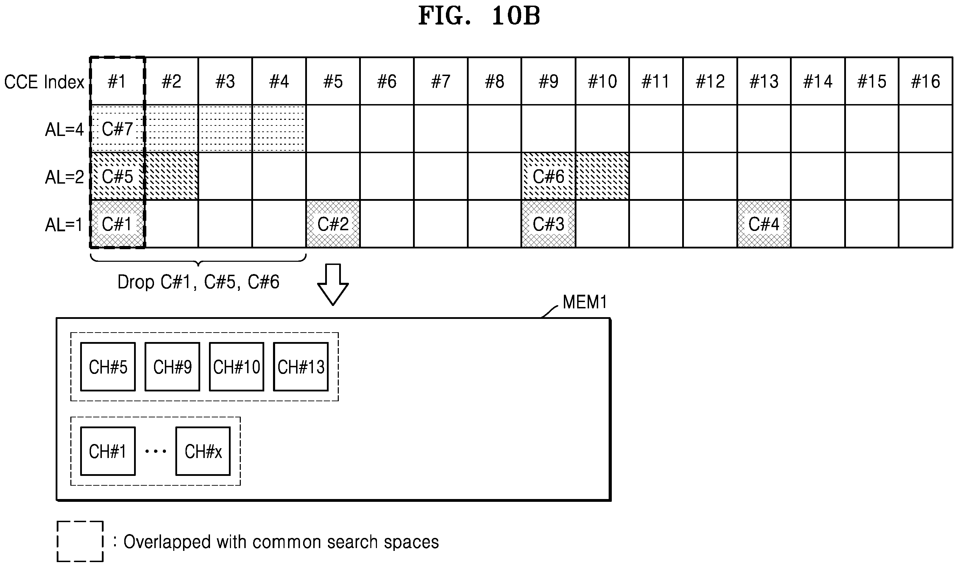

Referring to FIG. 8, in operation S200, the terminal (e.g., terminal 150 of FIG. 1, terminal 520 of FIG. 6) may identify the priority between the common search spaces and the user specific search spaces. The priority is further described with reference to FIG. 9. The operation of the PDCCH candidate unit is further described with reference to FIGS. 10A and 10B.

In operation S210, the terminal 150 may perform dropping of any one of the first PDCCH candidate and/or the second PDCCH candidate overlapping each other based on the priority. The terminal 150 may perform dropping from the search space having the lower priority. For example, when the common search spaces have a higher priority than the user specific search spaces, the terminal 150 may perform dropping of the second PDCCH candidate of the user specific search spaces with a relatively lower priority. In an embodiment, the dropping of the second PDCCH candidate may exclude the CCEs included in the second PDCCH candidate from the object CCE.

FIG. 9 is a table diagram depicting the priority of FIG. 8, according to an example embodiment.

Referring to a table TB of FIG. 9, the priority may be determined according to the type of the search space and the type of the PDCCH arranged in the search space.

In an example embodiment, the common search space CSS having a first PDCCH type Type0 may have a first priority P1, the common search space CSS having a second PDCCH type Type0A may have a second priority P2, the common search space CSS having a third PDCCH type Type1 may have a third priority P3, the common search space CSS having a fourth PDCCH type Type2 may have a fourth priority P4, and the common search space CSS having a fifth PDCCH type Type3 may have a fifth priority P5. Alternatively or additionally, the user specific search space USS may have a sixth priority P6.

The first to sixth priorities P1 to P6 above are named in the described order and the order may not be the same as the actual priority. Alternatively or additionally, the first to sixth priorities P1 to P6 may be determined in advance through the RRC signaling and/or MAC CE between the terminal 150 and the base station 100.

In an example embodiment, the terminal 150 may compare the priority between the common search spaces and the user specific search spaces by referring to the table TB.

In some embodiments, the first to sixth priorities P1 to P6 may be changed through the RRC signaling and/or MAC CE between the terminal 150 and the base station 100 according to the multiple TRP environment of the wireless communication system 1.

FIG. 10A is a flowchart illustrating the specific dropping operation of the PDCCH candidate unit according to an example embodiment. FIG. 10B is a diagram depicting the example operation of FIG. 10A, according to an example embodiment. The aspects of FIG. 10B may be premised on the aspects described in FIG. 5E, and as such, redundant descriptions are omitted.

Referring to FIG. 10A, in operation S300a, the terminal 150 may identify that the priority of the common search spaces is higher than the user specific search spaces.

In operation S310a, the terminal 150 may drop the second PDCCH candidate overlapping the first PDCCH candidate. For example, the terminal 150 may determine the object CCEs by dropping the second PDCCH candidate.

Referring to FIG. 10B, when the user specific search spaces overlap the common search spaces in CCE#1, the terminal 150 may perform dropping of the second PDCCH candidates C#1, C#5, and C#7 to determine the object CCEs.

For example, the terminal 150 may exclude CCE#1, CCE#2, CCE#3, and CCE#4 included in the second PDCCH candidates C#1, C#5, and C#7 from the object CCEs. That is, the terminal 150 may perform channel estimation of CCE#5, CCE#9, CCE#10, and CCE#13 to perform blind decoding of the second PDCCH candidates C#1 to C#7 of the user specific search spaces. The terminal 150 may store the channel estimation values CH#5, CH#9, CH#10, and CH#13 corresponding to CCE#5, CCE#9, CCE#10, and CCE#13, respectively, in the first memory MEM1.

When blind decoding of the second PDCCH candidates C#1, C#5, and C#7 that are dropped in the channel estimation operation is performed, the terminal 150 may use the channel estimation values CH#5, CH#9, CH#10, and CH#13 stored in the first memory MEM1.

In an embodiment, the terminal 150 may control the number of the object CCEs by PDCCH candidate units so that the first memory MEM1 may be sufficient to perform the channel estimation operation.

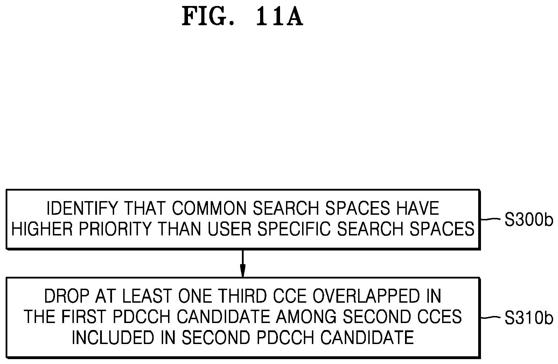

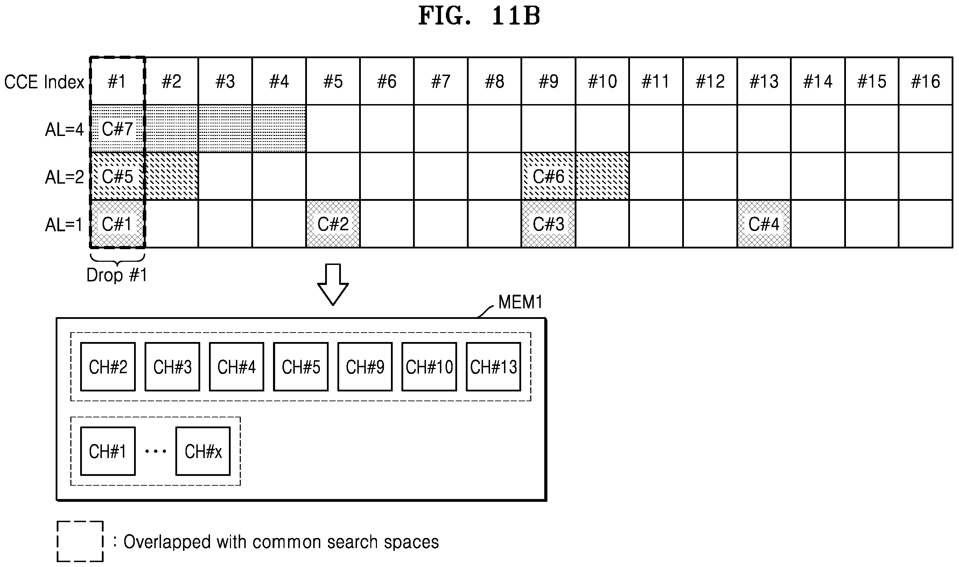

FIG. 11A is a flowchart illustrating a dropping operation of the CCE candidate unit, according to an example embodiment. FIG. 11B is a diagram depicting the example operation of FIG. 11A, according to an example embodiment. The aspects of FIG. 11B may be premised on the aspects described in FIG. 5E, and as such, redundant descriptions are omitted.

Referring to FIG. 11A, in operation S300b, the terminal 150 may identify that the priority of the common search spaces is higher than the user specific search spaces.

In operation S310b, the terminal 150 may drop at least one third CCE overlapped in the first PDCCH candidate among the second CCEs included in the second PDCCH candidate.

Referring to FIG. 11B, when the user specific search spaces overlap the common search spaces in CCE#1, the terminal 150 may perform dropping of CCE#1, which may be identified as the overlapped third CCE, to determine the object CCEs.

For example, the terminal 150 may exclude the CCE#1 from among the second CCEs (e.g., CCE#1, CCE#2, CCE#3, CCE#4, CCE#5, CCE#9, CCE#10, and CCE#13) included in the second PDCCH candidates C#1 to C#7 of the user specific search spaces from the object CCE. That is, the terminal 150 may perform channel estimation of CCE#2, CCE#3, CCE#4, CCE#5, CCE#9, CCE#10, and CCE#13 to perform blind decoding of the second PDCCH candidates C#1 to C#7 of the user specific search spaces. The terminal 150 may store channel estimation values CH#2, CH#3, CH#4, CH#5, CH#9, CH#10, and CH#13 corresponding to CCE#2, CCE#3, CCE#4, CCE#5, CCE#9, CCE#10, and CCE#13, respectively, in the first memory MEM1.

When blind decoding of the second PDCCH candidates C#1, C#5, and C#7 that are dropped in the channel estimation operation is performed, the terminal 150 may use the channel estimation values CH#2, CH#3, and CH#4 stored in the first memory MEM1.

In an embodiment, the terminal 150 may control the number of the object CCEs by CCE candidate units so that the first memory MEM1 may be sufficient to perform the channel estimation operation.

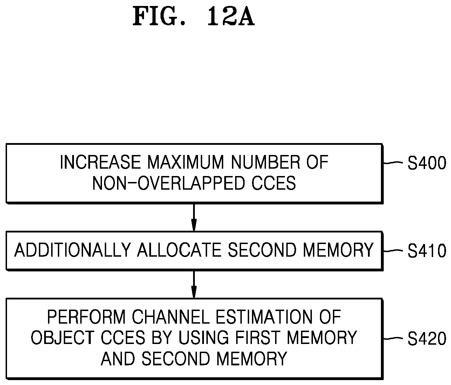

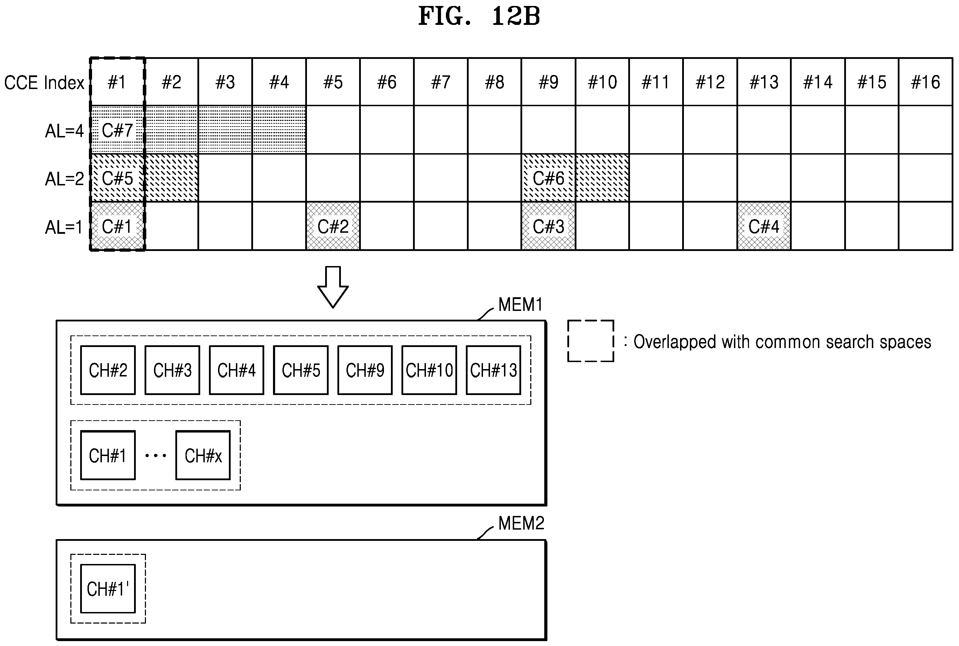

FIG. 12A is a flowchart illustrating an operating method, performed by a terminal, of additionally allocating a memory, according to an example embodiment. FIG. 12B is a diagram depicting the example operation of FIG. 12A, according to an example embodiment. The aspects of FIG. 12B may be premised on the aspects described in FIG. 5E, and as such, redundant descriptions are omitted.

Referring to FIG. 12A, in operation S400, the terminal 150 may increase the maximum number (e.g., threshold) of non-overlapped CCEs when the common search spaces overlap the user specific search spaces.

In operation S410, the terminal 150 may further allocate a memory used for the channel estimation operation of the object CCEs of the common search spaces and the user specific search spaces in response to the increased maximum number (e.g., threshold) of non-overlapped CCEs. In some embodiments, operation S400 may be omitted and operation S410 may be performed immediately.

In operation S420, the terminal 150 may perform channel estimation of the object CCEs by using the first memory and the second memory. Because separate dropping operation may not be performed, the object CCEs in operation S420 may include the first CCEs included in the first PDCCH candidates of the common search spaces and the second CCEs included in the second PDCCH candidates of the user specific search spaces.

Referring to FIG. 12B, when the user specific search spaces overlap the common search spaces in CCE#1, the terminal 150 may additionally allocate a second memory MEM2 for channel estimation of the object CCEs without performing dropping of CCE#1, which may be identified as the overlapped third CCE.

For example, the terminal 150 may perform channel estimation of object CCEs including the second PDCCHs #1, #2, #3, #4, #5, #9, #10, and #13 included in the second PDCCH candidates C#1 to C#7. The terminal 150 may store channel estimation values CH#1', CH#2, CH#3, CH#4, CH#5, CH#9, CH#10, and CH#13 corresponding to the second CCEs CCE#1, CCE#2, CCE#3, CCE#4, CCE#5, CCE#9, CCE#10, and CCE#13, respectively, in the first memory MEM1 and/or the second memory MEM2.

In the embodiments described in FIGS. 7 to 12B, when the common search spaces and the user specific search spaces are identified as being overlapped with each other, the number of the non-overlapped CCEs may not be considered, and dropping of some CCEs may be performed immediately and/or a memory may be added.

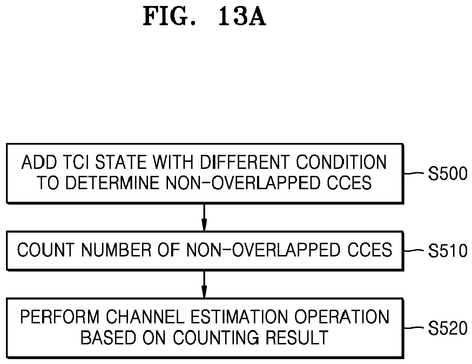

The above-described embodiments are understood to be non-limiting example embodiments, and such, the present disclosure is not limited thereto. For example, the terminal 150 may count the number of the non-overlapped CCEs, and when the result of counting exceeds the maximum number (e.g., threshold) of non-overlapped CCEs per slot, the terminal 150 may perform dropping of some CCEs and/or add the memory. Examples related thereto are described with reference to FIGS. 13A to 15.

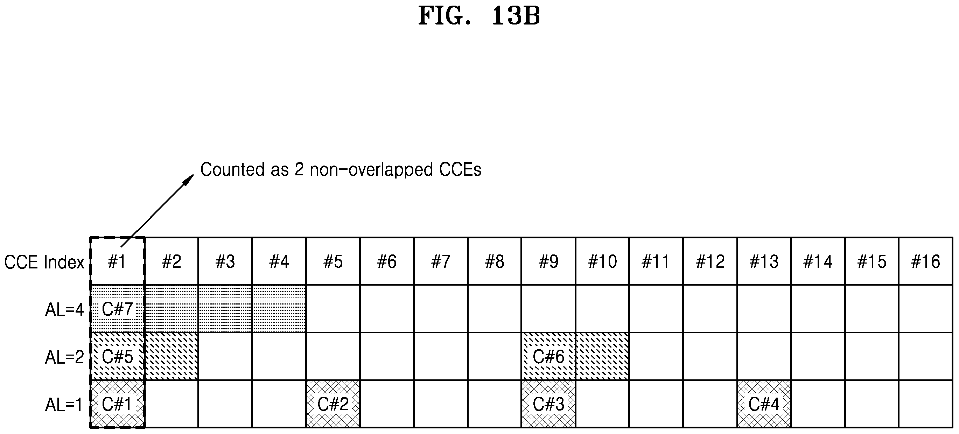

FIG. 13A is a flowchart illustrating an operating method of the terminal, according to an example embodiment. FIG. 13B is a diagram depicting the example operation of FIG. 13A, according to an example embodiment. The aspects of FIG. 13B may be premised on the aspects described in FIG. 5E, and as such, redundant descriptions are omitted. In FIG. 13A, it may be assumed that the common search spaces overlap the user specific search spaces.

Referring to FIG. 13A, in operation S500, the terminal 150 may add a TCI state with a different condition to determine the non-overlapped CCEs. In an example embodiment, the terminal 150 may add a TCI state with a different condition to the condition of the non-overlapped CCE to determine the non-overlapped CCEs. In an embodiment, the different TCI state may be defined in a telecommunications standard, such as, but not limited to, a 3GPP standard. For example, regarding the overlapped third CCE, the terminal 150 may determine the overlapped third CCE included in the first CCEs of the common search spaces and the overlapped third CCE included in the second CCEs of the user specific search spaces as different non-overlapped CCEs.

In operation S510, the terminal 150 may count the number of non-overlapped CCEs among the first CCEs and the second CCEs.

In operation S520, the terminal 150 may perform the channel estimated operation based on the counting result. In an example embodiment, the terminal 150 may determine the object CCEs by performing dropping of some CCEs when the counting result exceeds the maximum number (e.g., threshold) of non-overlapped CCEs per slot. In other example embodiments, when the counting result exceeds the maximum number (e.g., threshold) of non-overlapped CCEs per slot, the terminal 150 may increase the maximum number (e.g., threshold) of non-overlapped CCEs per slot and additionally allocate a memory used for channel estimation of object CCEs.

That is, since the channel estimation of the third CCE may be performed twice, the terminal 150 may identify whether the memory allocated for channel estimation of the current object CCEs is insufficient by counting the third CCE as two non-overlapped CCEs. The terminal 150 may drop some CCEs from the object CCE and/or additionally allocate a memory when the terminal 150 identifies that the memory is insufficient.

Referring to FIG. 13B, when the user specific search spaces overlap the common search spaces in CCE#1, the terminal 150 may count CCE#1, which is the third CCE, as two non-overlapped CCEs. By counting CCE#1 as two non-overlapped CCEs, the terminal 150 may identify that the channel estimation values provided by the two channel estimation operations may be stored in the first memory. When the terminal 150 estimates that the first memory may be insufficient due to CCE#1, the terminal 150 may control the number of the object CCEs and/or may additionally allocate the second memory.

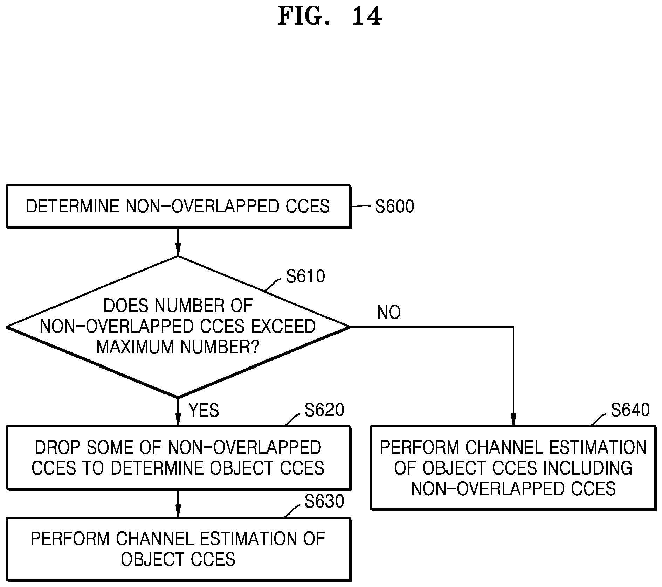

FIG. 14 is a flowchart illustrating an operating method of the terminal according to an example embodiment. In FIG. 14, it may be assumed that the common search spaces overlap the user specific search spaces.

Referring to FIG. 14, in operation S600, the terminal 150 may determine the non-overlapped CCEs from the first CCEs included in the first PDCCH candidates of the common search spaces and the second CCEs included in the second PDCCH candidates of the user specific search spaces. The terminal 150 may count the number of non-overlapped CCEs.

In operation S610, the terminal 150 may identify whether the number of non-overlapped CCEs exceeds the maximum number (e.g., threshold) of non-overlapped CCEs per slot.

When operation S610 is 'YES', operation S610 may be followed by operation S620, and the terminal 150 may perform dropping of some of the non-overlapped CCEs to determine the object CCEs.

In operation S630, the terminal 150 may perform channel estimation of the object CCEs.

When operation S610 is 'NO', operation S610 may be followed by operation S640, and the terminal 150 may perform channel estimation of the object CCEs including the non-overlapped CCEs. In such an embodiment, the non-overlapped CCEs may include the first CCEs and the second CCEs.

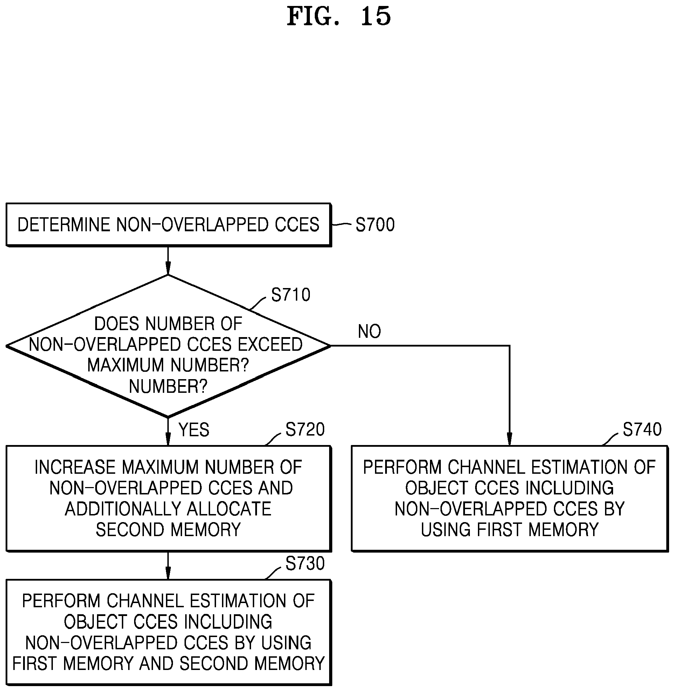

FIG. 15 is a flowchart depicting an operating method of the terminal, according to an example embodiment. In FIG. 15, it may be assumed that the common search spaces overlap the user specific search spaces.

In operation S700, the terminal 150 may determine the non-overlapped CCEs from the first CCEs included in the first PDCCH candidates of the common search spaces and the second CCEs included in the second PDCCH candidates of the user specific search spaces. Alternatively or additionally, the terminal 150 may count the number of non-overlapped CCEs.

In operation S710, the terminal 150 may identify whether the number of non-overlapped CCEs exceeds the maximum number (e.g., threshold) of non-overlapped CCEs per slot.

When operation S710 is 'YES', operation S710 may be followed by S720, and the terminal 150 may increase the maximum number (e.g., threshold) of non-overlapped CCEs and additionally allocate the second memory for channel estimation of the object CCEs.

In operation S730, the terminal 150 may perform channel estimation of the object CCEs including the non-overlapped CCEs by using the first memory and the second memory.

When operation S710 is 'NO', operation S710 may be followed by operation S740, and the terminal 150 may perform channel estimation of the object CCEs including the non-overlapped CCEs by using the first memory allocated in advance.

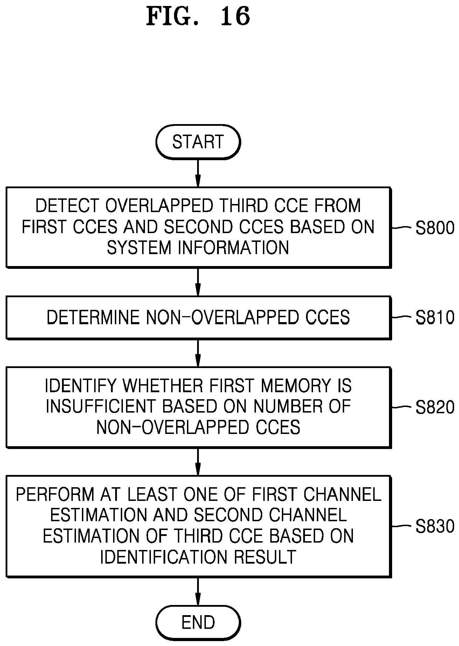

FIG. 16 is a flowchart illustrating an operating method of the terminal, according to an example embodiment.

Referring to FIG. 16, in operation S800, the terminal 150 may, based on the system information received from the base station 100, detect the overlapped third CCE in the first CCEs included in the common search spaces and based on the single TCI state and the second CCEs included in the user specific search spaces and based on the multiple TCI states. In an example embodiment, the system information, which may be received from the base station 100, may include scheduling information of the CORESETs. The terminal 150 may detect the third CCE based on the system information to identify that the common search space and the user specific search space are overlapped with each other.

In operation S810, the terminal 150 may determine the non-overlapped CCEs in the first CCEs and the second CCEs. When the terminal 150 performs operation S810, a TCI state with a different condition may be added to determine the non-overlapped CCEs. The terminal 150 may add the TCI state with a different condition in a similar manner to the operations described with reference to FIG. 13A, and as such, repeated descriptions are omitted. Alternatively or additionally, the terminal 150 may count the number of non-overlapped CCEs.

In operation S820, the terminal 150 may identify whether the first memory is insufficient based on the number of non-overlapped CCEs. In an embodiment, the first memory may be a memory allocated in advance to be used for channel estimation of the object CCEs of the common search spaces and the user specific search spaces. In an example embodiment, the terminal 150 may identify that the first memory may be insufficient when the number of non-overlapped CCEs exceed the maximum number (e.g., threshold) of non-overlapped CCEs per slot.

In operation S830, the terminal 150 may perform at least one of the first channel estimation and the second channel estimation of the third CCE based on the identification result. In an example embodiment, the first channel estimation may be performed based on the single TCI state, and/or the second channel estimation may be performed based on the multiple TCI states. In an example embodiment, when the first memory is identified as being insufficient, the terminal 150 may select and perform any one of the first channel estimation and the second channel estimation. That is, the terminal 150 may exclude any one of the overlapped third CCE included in the first CCEs and the overlapped third CCE included in the second CCEs from the object CCE. In an embodiment, the terminal 150 may store a result of the selected channel estimation in the first memory. In other example embodiments, when the first memory is identified as being insufficient, the terminal 150 may additionally allocate the second memory to perform both the first channel estimation and the second channel estimation of the third CCE. The terminal 150 may store a result of the first channel estimation and a result of the second channel estimation in the first memory and/or the second memory.

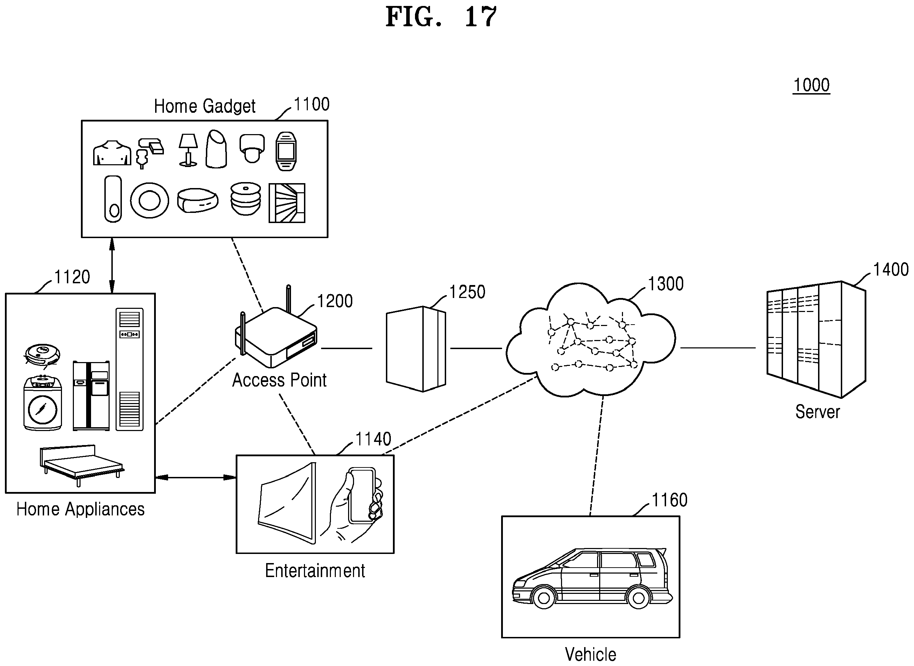

FIG. 17 is a conceptual diagram of an Internet of Things (IoT) network system to which the embodiments of the present disclosure may be applied.

Referring to FIG. 17, an IoT network system 1000 may include a plurality of IoT devices (e.g., home gadgets 1100, home appliances 1120, entertainment devices 1140, and vehicles 1160), an access point 1200, a gateway 1250, a wireless network 1300, and a server 1400. The IoT may refer to a network between objects using wired/wireless communication.

The IoT devices (e.g., home gadgets 1100, home appliances 1120, entertainment devices 1140, and vehicles 1160) may form a group according to the characteristics of each IoT device. For example, the IoT devices may be grouped into a home gadget group 1100, a home appliance/furniture group 1120, an entertainment group 1140, or a vehicle group 1160, and the like. The plurality of IoT devices (e.g., home gadgets 1100, home appliances 1120, and entertainment devices 1140) may be connected to a communication network and/or to other IoT devices through the access point 1200. In an embodiment, the access point 1200 may be embedded in an IoT device. The gateway 1250 may change a protocol to connect the access point 1200 to an external wireless network. For example, IoT devices (e.g., home gadgets 1100, home appliances 1120, and entertainment devices 1140) may be connected to an external network through the gateway 1250. The wireless network 1300 may include an internet and/or public network. The plurality of IoT devices (e.g., home gadgets 1100, home appliances 1120, entertainment devices 1140, and vehicles 1160) may be connected to the server 1400 providing a predetermined service through the wireless network 1300. Alternatively or additionally, the user may use the service through at least one of the plurality of IoT devices (e.g., home gadgets 1100, home appliances 1120, entertainment devices 1140, and vehicles 1160).

According to embodiments of the present disclosure, the plurality of IoT devices (e.g., home gadgets 1100, home appliances 1120, entertainment devices 1140, and vehicles 1160) may perform a channel estimation operation based whether the common search spaces to which the single TCI state is applied and the user specific search spaces to which the multiple TCI states are applied overlap each other.

While the present disclosure has been particularly shown and described with reference to embodiments thereof, it is to be understood that various changes in form and details may be made therein without departing from the scope of the following claims.

**Claims**

1. An operating method of a terminal to communicate with a base station, the operating method comprising:

   detecting at least one overlapped third control channel element, CCE, in a plurality of first CCEs included in first search spaces corresponding to a first physical downlink control channel, PDCCH, received from a first transmission and reception point, TRP, of the base station, and in a plurality of second CCEs included in second search spaces corresponding to a second PDCCH received from the first TRP and a second TRP of the base station;

   determining, based on the at least one overlapped third CCE, object CCEs from the plurality of first CCEs and the plurality of second CCEs; and

   performing channel estimation of the object CCEs by using a first memory.

2. The operating method of claim 1, wherein the determining the object CCEs comprises:
   dropping the at least one overlapped third CCE from the object CCEs among any one of the plurality of first CCEs and the plurality of second CCEs.

3. The operating method of claim 2, wherein the dropping the at least one overlapped third CCE comprises:

based on a number of non-overlapped CCEs in the plurality of first CCEs and the plurality of second CCEs exceeding a maximum number of non-overlapped CCEs per slot, dropping the at least one overlapped third CCE from the object CCEs among any one of the plurality of first CCEs and the plurality of second CCEs.

4. The operating method of claim 3, wherein the dropping the at least one overlapped third CCE comprises:
counting non-overlapped CCEs in each of the plurality of first CCEs and the plurality of second CCEs to be included in the number of non-overlapped CCEs.

5. The operating method of any preceding claim, wherein the determining the object CCEs comprises:

comparing a first priority of the first search spaces with a second priority of the second search spaces;
selecting, based on a result of the comparing, any one of the plurality of first CCEs and the plurality of second CCEs; and
dropping, from the object CCEs, the at least one overlapped third CCE from among the selected any one of the plurality of first CCEs and the plurality of second CCEs.

6. The operating method of claim 5, further comprising:

determining the first priority of the first search spaces based on a first search space type of the first search spaces and a first PDCCH type of the first PDCCH arranged in the first search spaces; and
determining the second priority of the second search spaces based on a second search space type of the second search spaces and a second PDCCH type of the second PDCCH arranged in the second search spaces.

7. The operating method of any preceding claim, wherein the determining the object CCEs comprises:

increasing a maximum number of non-overlapped CCEs per slot; and
determining, based on the at least one overlapped third CCE and the increased maximum number of non-overlapped CCEs per slot, the object CCEs from the plurality of first CCEs and the plurality of second CCEs.

8. The operating method of any of claims 1-6, wherein the determining the object CCEs comprises:

increasing a maximum number of non-overlapped CCEs per slot; and
allocating a second memory to the first memory, based on the increased maximum number of non-overlapped CCEs per slot.

9. The operating method of any preceding claim, wherein the determining the object CCEs comprises:

selecting at least one first candidate from among first PDCCH candidates corresponding to the first search spaces and at least one second candidate from among second PDCCH candidates corresponding to the second search spaces;
dropping at least one PDCCH candidate included in the at least one overlapped third CCE from among the at least one selected first candidate and the at least one selected second candidate; and
determining the object CCEs from among first remaining PDCCH candidates corresponding to the first search spaces and second remaining PDCCH candidates corresponding to the second search spaces excluding the at least one dropped PDCCH candidate.

10. The operating method of any preceding claim, further comprising:

receiving, from the first TRP, the first PDCCH and the second PDCCH that have been transmitted based on a first transmission configuration indicator, TCI, state; and
receiving, from the second TRP, the second PDCCH that has been transmitted based on a second TCI state.

11. The operating method of claim 10, wherein the object CCEs comprise the at least one overlapped third CCE included in the plurality of first CCEs and the at least one overlapped third CCE included in the plurality of second CCEs, and

the performing the channel estimation of the object CCEs further comprises:
performing a first channel estimation of the at least one overlapped third CCE included in the plurality of first CCEs based on the first TCI state;

performing a second channel estimation of the at least one overlapped third CCE included in the plurality of second CCEs based on the first TCI state and the second TCI state; and
storing, in the first memory, a first result of the first channel estimation and a second result of the second channel estimation.

12. The operating method of any preceding claim, wherein the first search spaces are common search spaces, and the second search spaces are user specific search spaces.

13. The operating method of any preceding claim, wherein the first search spaces are included in a first control resource set, CORESET, configured by a master information block, MIB, and
the second search spaces are included in a second CORESET configured by the MIB, the second CORESET being different from the first CORESET.

14. An operating method of a terminal, the operating method comprising:

detecting an overlapped third control channel element, CCE, in a plurality of first CCEs included in common search spaces and based on a single transmission configuration indicator, TCI, state, and in a plurality of second CCEs included in user specific search spaces and based on multiple TCI states;
counting a number of non-overlapped CCEs based on the overlapped third CCE;
performing channel estimation of the overlapped third CCE based on a result of the counting.

15. The operating method of claim 14, wherein the counting the number of the non-overlapped CCEs comprises:
counting the overlapped third CCE as a non-overlapped CCE in the plurality of first CCEs and the plurality of second CCEs.

# FIG. 1

# FIG. 2A

# FIG. 2B

# FIG. 3

Base Station — 100

Controller — 110
Scheduler — 112

Memory Device — 120

Processing Circuit — 130

Transceiver — 142_1
144_11
144_1n

Transceiver — 142_2
144_21
144_2n

Transceiver — 142_j
144_j1
144_jn

# FIG. 4

# FIG. 5A

Radio frame (214)

Subframe (205)

. . .

Slot (206)

Resource element
(212)

$N_{BW}$
subcarriers
(204)

$N_{RB}$
subcarriers
(210)

Resource Block
(208)

$N_{symb}$ OFDM symbols
(202)

Frequency

Time

# FIG. 5B

1 Radio Frame
(300)

1 subframe
(301)

μ = 0
(304)

| 0 | 1 | 2 | 3 | 4 | 5 | 6 | 7 | 8 | 9 |

slot
(302)

μ = 1
(305)

| 0 | 1 | 2 | 3 | 4 | 5 | 6 | 7 | 8 | 9 | 10 | 11 | 12 | 13 | 14 | 15 | 16 | 17 | 18 | 19 |

slot
(303)

EP 4 373 000 A2

# FIG. 5C

Frequency

Time

▨ : CORESET#1

▩ : CORESET#2

FIG. 5D

# FIG. 5E

| CCE Index | #1 | #2 | #3 | #4 | #5 | #6 | #7 | #8 | #9 | #10 | #11 | #12 | #13 | #14 | #15 | #16 |
|---|---|---|---|---|---|---|---|---|---|---|---|---|---|---|---|---|
| AL=4 | C#7 | | | | | | | | | | | | | | | |
| AL=2 | C#5 | | | | | | | | C#6 | | | | | | | |
| AL=1 | C#1 | | | | C#2 | | | | C#3 | | | | C#4 | | | |

MEM1

| CH#1' | CH#2 | CH#3 | CH#4 | CH#5 | CH#9 | CH#10 | CH#13 |

| CH#1 | ··· | CH#x |

⌐ ¬
: Overlapped with common search spaces
L ⌐

▨ : Estimated channel value of uncounted non-overlapped CCE

☐ : Estimated channel value of counted non-overlapped CCE

EP 4 373 000 A2

# FIG. 6

510 Base Station

520 Terminal

S100
TRANSMIT FIRST INFORMATION
INDICATING CAPABILITY OF TERMINAL

S110
TRANSMIT SECOND INFORMATION
INDICATING THAT MULTIPLE
TCI STATES ARE ACTIVATED

S120
SCHEDULE CORESETS

S130
TRANSMIT PDCCHS

S140
PERFORM CHANNEL ESTIMATION BASED
ON WHETHER COMMON SEARCH SPACES
AND USER SPECIFIC SEARCH SPACES
OVERLAP EACH OTHER

S150
PERFORM BLIND DECODING BASED ON
CHANNEL ESTIMATION RESULT TO
OBTAIN A PLURALITY OF DCI

S160
TRANSMIT PDSCHS

S170
RECEIVE PDSCH BASED ON THE
PLURALITY OF DCI

# FIG. 7

S130(Fig.6)

S141

DO FIRST CCES AND
SECOND CCES OVERLAP
EACH OTHER?

NO

YES

S142

DROP SOME CCES TO IDENTIFY OBJECT
CCES

S144

PERFORM CHANNEL ESTIMATION
OF OBJECT CCES INCLUDING
FIRST AND SECOND CCES

S143

PERFORM CHANNEL ESTIMATION OF
OBJECT CCES

S150(Fig.6)

# FIG. 8

IDENTIFY PRIORITY BETWEEN COMMON SEARCH
SPACES AND USER SPECIFIC SEARCH SPACES ⎯ S200

PERFORM DROPPING OF ANY ONE OF
FIRST PDCCH CANDIDATE AND SECOND PDCCH
CANDIDATE OVERLAPPING EACH OTHER
BASED ON PRIORITY ⎯ S210

# FIG. 9

TB

| SS Type | PDCCH Type | Priority |
|---------|-----------|----------|
| CSS | Type0 | P1 |
| | Type0A | P2 |
| | Type1 | P3 |
| | Type2 | P4 |
| | Type3 | P5 |
| USS | | P6 |

# FIG. 10A

| IDENTIFY THAT COMMON SEARCH SPACES HAVE HIGHER PRIORITY THAN USER SPECIFIC SEARCH SPACES |
| --- |

— S300a

| DROP SECOND PDCCH CANDIDATE OVERLAPPED WITH FIRST PDCCH CANDIDATE |
| --- |

— S310a

FIG. 10B

# FIG. 11A

| IDENTIFY THAT COMMON SEARCH SPACES HAVE HIGHER PRIORITY THAN USER SPECIFIC SEARCH SPACES | S300b |

| DROP AT LEAST ONE THIRD CCE OVERLAPPED IN THE FIRST PDCCH CANDIDATE AMONG SECOND CCES INCLUDED IN SECOND PDCCH CANDIDATE | S310b |

FIG. 11B

# FIG. 12A

| |
|---|
| INCREASE MAXIMUM NUMBER OF NON-OVERLAPPED CCES — S400 |

| |
|---|
| ADDITIONALLY ALLOCATE SECOND MEMORY — S410 |

| |
|---|
| PERFORM CHANNEL ESTIMATION OF OBJECT CCES BY USING FIRST MEMORY AND SECOND MEMORY — S420 |

## FIG. 12B

| CCE Index | #1 | #2 | #3 | #4 | #5 | #6 | #7 | #8 | #9 | #10 | #11 | #12 | #13 | #14 | #15 | #16 |
|---|---|---|---|---|---|---|---|---|---|---|---|---|---|---|---|---|
| AL=4 | C#7 | | | | | | | | | | | | | | | |
| AL=2 | C#5 | | | | | | | | C#6 | | | | | | | |
| AL=1 | C#1 | | | | C#2 | | | | C#3 | | | | C#4 | | | |

MEM1

| CH#2 | CH#3 | CH#4 | CH#5 | CH#9 | CH#10 | CH#13 |

| CH#1 | ··· | CH#x |

⌐ ⌐ : Overlapped with common search spaces

MEM2

| CH#1' |

EP 4 373 000 A2

# FIG. 13A

ADD TCI STATE WITH DIFFERENT CONDITION TO DETERMINE NON-OVERLAPPED CCES — S500

COUNT NUMBER OF NON-OVERLAPPED CCES — S510

PERFORM CHANNEL ESTIMATION OPERATION BASED ON COUNTING RESULT — S520

# FIG. 13B

EP 4 373 000 A2

Counted as 2 non-overlapped CCEs

| CCE Index | #1 | #2 | #3 | #4 | #5 | #6 | #7 | #8 | #9 | #10 | #11 | #12 | #13 | #14 | #15 | #16 |
|-----------|-----|-----|-----|-----|-----|-----|-----|-----|-----|-----|-----|-----|-----|-----|-----|-----|
| AL=4 | C#7 | | | | | | | | | | | | | | | |
| AL=2 | C#5 | | | | | | | | C#6 | | | | | | | |
| AL=1 | C#1 | | | | C#2 | | | | C#3 | | | | C#4 | | | |

# FIG. 14

DETERMINE NON-OVERLAPPED CCES — S600

DOES NUMBER OF NON-OVERLAPPED CCES EXCEED MAXIMUM NUMBER? — S610

NO

YES

DROP SOME OF NON-OVERLAPPED CCES TO DETERMINE OBJECT CCES — S620

PERFORM CHANNEL ESTIMATION OF OBJECT CCES — S630

PERFORM CHANNEL ESTIMATION OF OBJECT CCES INCLUDING NON-OVERLAPPED CCES — S640

# FIG. 15

DETERMINE NON-OVERLAPPED CCES — S700

DOES NUMBER OF NON-OVERLAPPED CCES EXCEED MAXIMUM NUMBER? NUMBER? S710

NO

YES S720

INCREASE MAXIMUM NUMBER OF NON-OVERLAPPED CCES AND ADDITIONALLY ALLOCATE SECOND MEMORY

PERFORM CHANNEL ESTIMATION OF OBJECT CCES INCLUDING NON-OVERLAPPED CCES BY USING FIRST MEMORY S740

S730

PERFORM CHANNEL ESTIMATION OF OBJECT CCES INCLUDING NON-OVERLAPPED CCES BY USING FIRST MEMORY AND SECOND MEMORY

# FIG. 16

```
                        ┌─────────┐
                        │  START  │
                        └─────────┘
                             │
                             ▼
    ┌───────────────────────────────────────────┐
    │     DETECT OVERLAPPED THIRD CCE FROM       │
    │  FIRST CCES AND SECOND CCES BASED ON       │──── S800
    │            SYSTEM INFORMATION              │
    └───────────────────────────────────────────┘
                             │
                             ▼
    ┌───────────────────────────────────────────┐
    │       DETERMINE NON-OVERLAPPED CCES        │──── S810
    └───────────────────────────────────────────┘
                             │
                             ▼
    ┌───────────────────────────────────────────┐
    │     IDENTIFY WHETHER FIRST MEMORY IS       │
    │    INSUFFICIENT BASED ON NUMBER OF         │──── S820
    │           NON-OVERLAPPED CCES              │
    └───────────────────────────────────────────┘
                             │
                             ▼
    ┌───────────────────────────────────────────┐
    │   PERFORM AT LEAST ONE OF FIRST CHANNEL    │
    │     ESTIMATION AND SECOND CHANNEL          │
    │   ESTIMATION OF THIRD CCE BASED ON         │──── S830
    │          IDENTIFICATION RESULT             │
    └───────────────────────────────────────────┘
                             │
                             ▼
                        ┌─────────┐
                        │   END   │
                        └─────────┘
```

# FIG. 17